# FASCICULE DE BREVET EUROPEEN

(11) **EP 1 899 638 B1**
(45) Date de publication et mention de la délivrance du brevet: **15.04.2009**
(21) Numéro de dépôt: 06764792.5
(22) Date de dépôt: 15.06.2006
(51) Int. Cl.: F16L 58/10, B05D 1/00, B05D 7/22

(54) **PIÈCE DE RACCORDEMENT DE CONDUITES COMPORTANT UNE CHEMISE INTERNE, PROCEDE DE REVETEMENT ET PROCEDE D'ASSEMBLAGE**
KANALVERBINDUNGSSTÜCK MIT INNENAUSKLEIDUNG, BESCHICHTUNGSVERFAHREN UND MONTAGEVERFAHREN
DUCT CONNECTING PIECE COMPRISING AN INTERNAL LINER, COATING METHOD, AND ASSEMBLY METHOD

(30) Priorité: 05.07.2005 FR 0507153
(43) Date de publication de la demande: 19.03.2008
(73) Titulaire: Saipem SA, 78180 Montigny-le-Bretonneux (FR)
(72) Inventeur: PIONETTI, François-Régis, F-50450 La Baleine (FR)
(74) Mandataire: Domange, Maxime
(86) Numéro de dépôt international: PCT/FR2006/001354
(87) Numéro de publication internationale: WO 2007/006877

(56) Documents cités:
- DE-A1- 3 437 697
- GB-A- 585 395
- US-A- 3 376 152
- PATENT ABSTRACTS OF JAPAN vol. 007, no. 155 (C-175), 7 juillet 1983 (1983-07-07) & JP 58 067383 A (BENKAN PLANT KK), 21 avril 1983 (1983-04-21)

## Description

La présente invention concerne le domaine des conduites véhiculant des fluides, notamment des fluides corrosifs, à terre ou en mer et plus particulièrement des conduites sous-marines véhiculant notamment de l'eau de mer, et des pièces de raccordement de conduites comportant un chemisage interne.

Elle concerne plus particulièrement le raccordement de deux éléments unitaires de conduite à chemisage interne, et plus particulièrement encore d'éléments de 24 m ou 48 m de longueur installées sur des champs pétrolifères en mer profonde, par 2000 à 3000 m, voire plus, à partir de navire de pose équipés de tours de pose en J , à l'aide de pièce de raccordement non entièrement cylindrique du type élément de conduite coudé, élément de dérivation en T, voire encore des manchons de rétrécissement.

La présente invention concerne plus particulièrement un procédé de revêtement de la surface interne d'une pièce de raccordement en acier comprenant un volume interne vidé délimité par ladite surface interne, revêtement par un chemisage constitué d'une couche d'épaisseur sensiblement uniforme d'un matériau thermoplastique, ladite pièce de raccordement comprenant au moins 2 extrémités tubulaires ouvertes aptes au raccordement respectivement d'au moins 2 éléments de conduite en acier comprenant de préférence un même chemisage interne.

La réhabilitation des réseaux d'eau, de gaz, ainsi que des égouts a vu se développer de longue date des technologies dites "sans tranchée", c'est-à-dire des technologies qui consistent à insérer, à l'intérieur de la conduite existante, une chemise tubulaire, en général en matériau souple tel des thermoplastiques, des thermodurcissables ou des matériaux composites thermodurcissables, lesdites chemises étant soit insérées après repliement sur elles-mêmes le long d'une génératrice longitudinale pour former une section transversale en forme de haricot, puis remises au rond par simple pressurisation interne, soit encore étirées par mise en traction pour que le diamètre de ladite chemise se réduise à une valeur inférieure au diamètre intérieur de ladite conduite. Dans ce dernier cas, en fin d'enfilage, la tension dans la chemise est relâchée et ladite chemise reprend alors son diamètre initial et vient se plaquer naturellement sur la face interne de ladite conduite. Ce dernier mode d'insertion est connu sous le nom de Swagelining et est mis en oeuvre couramment pour la réhabilitation des conduites d'eau ou de gaz, sur des distances unitaires pouvant atteindre 500m, voire un kilomètre en ligne droite.

Cette technologie est aussi mise en oeuvre dans le cas de transport de fluides corrosifs sous forte pression, ce qui permet d'utiliser une conduite résistant à la pression en acier au carbone classique, donc peu coûteux et facile à mettre en oeuvre par soudure, la résistance à la corrosion étant assurée par la chemise interne. On réalise ainsi des longueurs unitaires pouvant atteindre plusieurs centaines de mètres qu'il convient alors de raccorder entre elles tout en assurant une continuité de la protection à la corrosion. Trois types de connexions sont couramment utilisés : la liaison par brides, le joint vissé et le joint soudé. Dans le cas du raccordement par brides, il suffit de retourner la chemise sur la face de la bride, le serrage des brides venant alors pincer les chemises face à face, assurant ainsi la continuité de la fonction anti-corrosion. Dans le cas des joints vissés, on assure par exemple la continuité par une bague munie de joints qui assure l'étanchéité avec chacune des chemises amont et aval. Dans le cas de joints soudés, il convient d'arrêter la chemise à une distance significative, par exemple 100 à 200 mm de l'extrémité de la conduite, de manière à ce que l'échauffement de la paroi en acier lors du soudage, ne vienne pas endommager ladite chemise. Le problème qui se pose alors est d'assurer la protection contre la corrosion de la zone non chemisée comprise entre l'extrémité de la chemise de la conduite N et l'extrémité de la chemise de la conduite suivante N+1.

On connaît le brevet GB-2,218,488 qui décrit la méthode dite de "Swagelining" consistant à étirer une conduite circulaire en matériau souple, appelée ci-après "chemise", de manière à réduire son diamètre pour pouvoir l'insérer dans une conduite par tirage, le diamètre au repos de ladite chemise étant supérieur au diamètre interne de ladite conduite. Une autre manière pour insérer une telle chemise est de la déformer en la pliant pour obtenir une section transversale en forme de "haricot" qui s'inscrit alors dans un cercle de diamètre beaucoup plus faible et autorise de ce fait l'insertion par simple tirage à travers la conduite en acier. En fin de tirage, les extrémités débordant largement reprennent naturellement une forme sensiblement circulaire et il est simple d'y ajuster un bouchon. En pressurisant la chemise à l'air comprimé, celle-ci reprend sa forme circulaire et ladite chemise vient se plaquer fermement sur la paroi interne de la conduite acier.

Le terme "chemise" correspond à un revêtement aussi connu dans le métier sous la dénomination anglaise de "liner".

On connaît les brevets GB-2391547, GB-2,298,256, WO-2004-015321 et WO-2004-011840, qui décrivent l'assemblage de deux éléments de conduite à l'aide d'un manchon tubulaire de jonction inséré au niveau des extrémités non chemisées des parois en acier de deux éléments de conduite à assembler. Ledit manchon tubulaire de jonction étant en matériau résistant à la corrosion.

On a aussi décrit dans la demande non publiée au nom de la demanderesse FR 0411055 (2876773) un mode de réalisation de chemisage interne de conduite tubulaire rapporté par enfilage, et un mode par soudage d'éléments de conduite ainsi chemisés, qui sont à la fois fiables mécaniquement, et plus simples et moins coûteux à réaliser, notamment dans le cas d'un assemblage, sur site à partir d'un navire en mer, d'éléments de conduite de longueur réduite adaptés à la pose à partir d'un navire en mer. De tels procédés et dispositifs de chemisage et assemblage d'éléments de conduite requièrent un nombre minimal de pièces pour le raccordement des extrémités non chemisées des éléments de conduites à assembler et ne requièrent pas la mise en oeuvre d'outils spécifiques, tels que des outils de sertissage, lors de l'assemblage des deux éléments de conduite chemisée. Ces dispositifs et procédés de chemisage et assemblage d'éléments de conduite sont destinés à réaliser des conduites aptes à être posées à grande profondeur et, plus particulièrement encore, des conduites aptes à servir à l'injection d'eau et, notamment, d'injection d'eau de mer.

Les procédés de chemisage décrits dans l'Etat de la technique antérieure ne permettent pas de réaliser le chemisage interne d'une pièce de raccordement dont le volume interne est délimité par une surface non cylindrique, c'est-à-dire qui n'est pas formée par un seul et unique cylindre. Lorsque l'on veut faire suivre à une conduite un changement de direction important que ce soit pour aller du fond de la mer jusqu'en surface à l'aide d'une pièce de raccordement constituée d'un élément de conduite coudé, ou pour rejoindre en dérivation une autre conduite à l'aide d'une pièce de raccordement constituée d'un élément de dérivation en T, on doit mettre en oeuvre des pièces de raccordement à surface interne qui ne forment pas un seul et unique cylindre. De même lorsque l'on veut assembler des éléments de conduite de diamètres internes différents, on doit recourir à des manchons de rétrécissement de diamètre, présentant à une extrémité un diamètre interne correspondant à celui de l'un des éléments de conduite et à l'autre extrémité un diamètre correspondant à celui de l'autre conduite. Pour ces pièces de surfaces internes non formées essentiellement d'un seul cylindre, les procédés de chemisage par enfilage ne sont pas adaptés.

On connaît dans JP 58 067383 un procédé de chemisage des parois du volume interne non cylindrique d'une pièce de jonction comprenant des orifices tubulaires ouverts, dans lequel on introduit une résine sous forme de colle solide pâteuse (« hot melt resin ») dans ladite pièce avant fermeture desdits orifices. Puis, on fait subir à ladite pièce des rotations multi directionnelles à vitesse élevée tout en la chauffant.

Dans ce procédé, la résine du type « colle à chaud » est dotée de fortes propriétés d'adhérence sur la paroi et c'est la force centrifuge générée par la rotation qui permet d'étaler la résine sur toute la surface interne de la pièce, le chauffage favorisant l'adhésion de la résine sur la surface de la paroi. Mais, ce procédé ne permet pas d'obtenir une répartition d'épaisseur réellement uniforme sur toute la paroi du volume interne de la pièce, car la force centrifuge est nécessairement d'intensité variable, celle-ci variant comme le carré de la distance du lieu où elle s'applique par rapport à l'axe de rotation de la pièce, et ce même en prévoyant des rotations multi directionnelles.

Le but de la présente invention est de fournir un procédé amélioré adapté pour réaliser le chemisage interne de ces pièces de raccordement à surface interne non cylindrique.

Un autre but de la présente invention est de fournir des procédés d'assemblage de pièces de raccordement ainsi chemisées avec des éléments de conduite chemisés qui soient adaptés aux différentes conditions de mise en oeuvre de ces procédés de raccordement que ce soit pour des conduites destinées à être mises en oeuvre dans des conditions basse pression comme les conduites mises en oeuvre pour le génie civil à terre, notamment pour les travaux publics, ou en mer à faible profondeur ; ou au contraire, des conduites mises en oeuvre dans des conditions de haute pression, notamment plus de 30 bars (3 MPa), et plus particulièrement en mer à grande profondeur.

Pour ce faire la présente invention fournit un procédé de revêtement de la surface interne d'une pièce de raccordement en acier comprenant un volume interne vide délimité par ladite surface interne, par un chemisage constitué d'une couche d'épaisseur sensiblement uniforme d'un matériau thermoplastique, ladite pièce de raccordement comprenant au moins 2 extrémités tubulaires ouvertes aptes au raccordement respectivement d'au moins 2 éléments de conduite en acier comprenant un même chemisage interne, caractérisé en ce que l'on réalise les étapes dans lesquelles:
a) on ferme lesdites extrémités ouvertes de ladite pièce de raccordement avec des couvercles dont au moins un desdits couvercles présente un orifice de remplissage avec vanne d'isolation apte à permettre l'introduction de granules de dit matériau thermoplastique dans ledit volume interne, et de préférence un orifice de ventilation ou purge avec vanne d'isolation, et on bouche toutes les autres ouvertures éventuelles de ladite pièce, et
b) on introduit desdites granules de dit matériau thermoplastique dans ledit volume interne à travers un dit orifice de remplissage, en quantité nécessaire et suffisante pour obtenir une couche de dit matériau thermoplastique sur toute ladite surface interne d'une épaisseur désirée sensiblement uniforme,et
c) on chauffe les parois de ladite pièce de raccordement délimitant ledit volume interne à une température permettant la fusion desdites granules, et
d) on fait tourner simultanément ladite pièce de raccordement selon au moins 2 axes de rotation différents, pendant un temps suffisant et à une vitesse suffisamment faible pour permettre la fusion dudit matériau thermoplastique sur ladite surface interne et sa répartition de manière sensiblement uniforme sur toute ladite surface interne, et
e) on refroidit ou laisse refroidir ladite pièce de raccordement avant d'enlever lesdits couvercles tout en maintenant ladite rotation.

Selon la présente invention, la rotation de la pièce se fait donc à vitesse suffisamment faible, de sorte que les granules restent toujours en position basse dudit volume interne tant qu'elles n'ont pas fondu et adhéré à la paroi. Et, c'est par contact prolongé avec une certaine zone de ladite surface interne de la paroi et suffisamment longtemps, qu'une certaine quantité de dit matériau peut, au début du processus fusionner et adhérer à la paroi pour former une mince pellicule. Puis, à la rotation suivante, une certaine quantité de dit matériau vient adhérer à ladite pellicule fusionnée, et fusionne à son tour, augmentant ainsi peu à peu l'épaisseur de la couche au fur et à mesure de la rotation de la pièce, jusqu'à épuisement des granulats. L'épaisseur de la couche peut ainsi être contrôlée en contrôlant le transfert thermique entre le dispositif de chauffage et la paroi, ainsi qu'entre la paroi et le matériau à l'intérieur de la pièce. Ledit transfert thermique peut être contrôlé par la température de chauffe, par le cycle de rotation de la pièce sur elle-même (vitesse et trajectoire selon les multiples axes), ainsi que par la masse calorifique de la pièce métallique, cette dernière étant le cas échéant avantageusement ajustée à l'aide d'écrans localisés réduisant les transferts thermiques.

Ainsi, le procédé selon l'invention permet donc d'obtenir un chemisage d'épaisseur réellement uniforme de toute la surface interne de la pièce.

Lors du chauffage de ladite pièce, la pression du gaz contenu dans ledit volume interne augmente et ceci contribue à maintenir ledit matériau fondu plaqué contre la dite surface interne.

Mais, pour éviter ou réduire le risque de décollage du chemisage interne de dit matériau, notamment dans le cas où l'on met en oeuvre un matériau thermoplastique à fort retrait tel que le polyéthylène à haute densité (PEHD), de préférence, on maintient la pression interne dans ledit volume interne, ce qui a pour effet de plaquer fortement le chemisage contre la paroi de la pièce pendant toute la phase de refroidissement, évitant ainsi un retrait de ladite chemise par rapport à la paroi intérieure de ladite pièce.

Dans un mode de réalisation préféré, on augmente la pression à l'intérieur dudit volume avant le refroidissement, en pressurisant ledit volume interne à l'aide d'un gaz, de préférence inerte, tel l'azote, ou de l'eau sous pression introduit(e) par ledit orifice de ventilation ou purge, et on maintient cette pression interne supérieure pendant le refroidissement, de préférence à une valeur d'au moins 10 bars(10 ⁶ Pa).

Cette pression interne élevée permet aussi d'éliminer le cas échéant les microbulles de gaz piégées dans l'épaisseur de la chemise à l'état pâteux.

Dans le cas d'une forte pression interne de maintien, on utilise de préférence desdits couvercles présentant un fond bombé de préférence soudé aux dites extrémités de ladite pièce de raccordement. La forme incurvée du fond du couvercle permet de mieux résister aux fortes pressions à l'intérieur dudit volume interne, et l'on évite ainsi l'utilisation de joints, ces derniers étant très délicats et coûteux à mettre en oeuvre pour des fortes pression associées aux températures élevées requises par le processus.

Si on utilise des matériaux à faible retrait comme le polyéthylène basse densité, il est possible de travailler à pression atmosphérique. Ce type de chemisage convient pour les conduites qui sont mises en oeuvre pour véhiculer des fluides dans des réseaux conventionnels, notamment les eaux ou gaz de réseau urbain. Dans ce cas, on peut effectuer la liaison entre ladite pièce de raccordement et lesdits éléments de conduite à l'aide de brides de liaison conventionnelles.

Selon des caractéristiques plus particulières du procédé de revêtement selon l'invention :
- à l'étape c), on chauffe lesdites parois en plaçant ladite pièce dans un dispositif de chauffage tel un four ou une rampe à gaz, ce qui permet de chauffer uniformément toutes les zones de ladite pièce ;
- à l'étape d), on fait tourner ladite pièce de raccordement à l'aide d'un dispositif de rotation multidirectionnel de roto moulage, le pilotage de chacun desdits axes de rotation étant de préférence contrôlés par un ordinateur.

On connaît des procédés et machines de roto moulage tels que notamment ceux décrits dans le brevet US-3,600,754, ou d'autres systèmes similaires opérés à l'intérieur d'un four.

Plus particulièrement, les granules de matériau thermoplastique sont des granules de polymères thermo formables choisis parmi les polyéthylène, polypropylène, polyamide, polyvinyle, notamment les PVC, PVDF (polyvinylidènefluoride), PTFE (Polytétrafluoroethylene), PEEK (polyether-etherkétone) et tous les autres polymères thermoformables.

Ces polymères présentent des températures de fusion de 160°C à 360°C.

Pour ces polymères on chauffe la pièce de raccordement à une température de 20 à 40°C supérieure à la température de fusion dudit polymère, sans trop excéder ces valeurs pour ne pas endommager les molécules, ce qui aurait pour effet de dégrader les performances mécaniques de la chemise obtenue. De préférence, le volume interne de la pièce est maintenu sous atmosphère de gaz inerte, tel l'azote, qu'il soit à la pression ambiante ou sous forte pression.

Dans un mode préféré de réalisation d'un procédé de revêtement selon l'invention,
- on réalise un premier dit revêtement pour obtenir un dit chemisage d'une première couche d'un premier matériau thermoplastique, et
- on réalise un second revêtement d'une seconde couche d'un second matériau thermoplastique différent dudit premier matériau, ledit second matériau thermoplastique étant contenu dans un réservoir différent et introduit dans ladite pièce de raccordement par un dit couvercle lorsque ledit premier matériau est intégralement fondu et adhère aux dites parois, ledit second matériau recouvrant ledit premier matériau et étant fondu jusqu'à obtenir l'épaisseur finale recherche.

Comme mentionné précédemment, ladite pièce de raccordement peut être de forme et fonction diverses, notamment suivant les modes de réalisation particuliers suivants dans lesquels :
- la dite pièce de raccordement est un élément de conduite coudé apte à permettre le raccordement de 2 éléments de conduite s'étendant dans deux directions différentes respectivement à chacune des extrémités dudit élément coudé constituant ladite pièce de raccordement ; ou
- ladite pièce de raccordement est un élément en forme de T ou de croix, apte à permettre le raccordement de 3 ou respectivement 4 éléments de conduite, voire plus, à chacune de ses extrémités s'étendant dans au moins deux directions faisant entre elles un angle compris entre 0 et 90°, ou de préférence 90°, ou
- ladite pièce de raccordement est un manchon tubulaire de rétrécissement présentant deux extrémités tubulaires dont les sections transversales circulaires sont de diamètres internes différents, aptes à permettre le raccordement de 2 éléments de conduite de diamètres correspondant respectivement aux diamètres internes des 2 extrémités tubulaires dudit manchon tubulaire de rétrécissement.

Le procédé selon l'invention est plus particulièrement avantageux et indispensable pour chemiser une pièce de raccordement dont ladite surface interne est une surface non cylindrique. En effet, dans ce cas les procédés traditionnels de chemisage par enfilage ne peuvent alors pas être valablement mis en oeuvre.

On entend ici par «non cylindrique», une surface non entièrement cylindrique, ladite surface interne pouvant cependant comprendre une ou plusieurs parties cylindriques, mais elle n'est pas formée essentiellement par un seul cylindre.

Dans un mode de réalisation avantageux, pendant l'étape de refroidissement, on pressurise ledit volume interne avec de l'eau à haute température, que l'on refroidit par circulation dans un échangeur de chaleur qui lui permet de perdre des calories tout en maintenant le niveau de pression souhaitée jusqu'à ce que l'ensemble de ladite pièce de raccordement et dudit matériau thermoplastique appliqué en couche soit complètement refroidi.

L'épaisseur de la couche de matériau thermoplastique résulte du transfert thermique entre l'atmosphère chaude du four et la paroi dudit volume interne de la pièce de raccordement. Si ledit transfert thermique est important, il en résultera une forte épaisseur de ladite couche de matériau thermoplastique, s'il est faible, il en résultera une sous épaisseur de ladite couche de matériau thermoplastique.

De manière à uniformiser l'épaisseur sur toute la surface de la pièce de raccordement, on ajuste le transfert thermique entre le dispositif de chauffage et l'intérieur de la pièce en isolant avantageusement thermiquement, et de manière localisée, les zones de la paroi de ladite pièce de raccordement présentant le plus fort taux de transfert thermique, par exemple la zone de raccordement entre la pièce et sa bride ou son bouchon d'extrémité. Pour ce faire, on applique avantageusement sur la surface externe de ladite paroi, de manière locale, un matériau thermiquement isolant jouant le rôle d'écran.

Selon un mode de réalisation particulier, ladite pièce de raccordement comprend à au moins une de ses extrémités tubulaires une première bride de liaison apte à coopérer avec une deuxième bride de liaison d'un dit élément de conduite à raccorder à ladite pièce de raccordement, et on réalise ledit revêtement en continuité de l'ensemble de la surface interne de la pièce de raccordement et de ladite première bride de liaison avec une couche de dit matériau thermoplastique, après fixation par soudage de ladite première bride à l'extrémité de ladite pièce de raccordement, et fermeture de l'extrémité ouverte de ladite première bride avec un dit couvercle.

La mise en oeuvre d'une bride de liaison permet de faciliter l'étape finale du raccordement de la pièce de liaison avec un élément de conduite in situ sur le lieu de pose, notamment au fond de la mer comme explicité ci-après.

Avantageusement, on met en oeuvre un dit couvercle dont la forme et le moyen de fixation sur ladite bride permettent de réaliser le revêtement en continuité de l'ensemble de la surface interne de la pièce de raccordement et de ladite première bride de liaison, et de la face externe d'appui de ladite première bride contre ladite deuxième bride, avec une couche de matériau thermoplastique.

La présente invention fournit donc également une pièce de raccordement comprenant un volume interne vide délimité par une surface interne enrobée du chemisage d'épaisseur sensiblement uniforme obtenu par un procédé de revêtement de chemisage selon l'invention.

Plus particulièrement la présente invention a pour objet une pièce de raccordement dont la dite surface interne est une surface non cylindrique.

Une pièce de raccordement selon l'invention peut comprendre à au moins une de ses extrémités une dite première bride de liaison à la quelle elle est soudée.

Dans un mode de réalisation avantageux d'une pièce de raccordement selon l'invention destinée à être assemblée à un élément de conduite ou à une bride de liaison par un manchon tubulaire de jonction, à au moins une de ses dites extrémités tubulaires ouvertes, comporte une partie terminale d'épaisseur réduite par rapport à l'épaisseur du reste dudit chemisage, obtenue par usinage, ladite partie terminale définissant ainsi une surface interne de révolution de diamètre interne plus grand que celui du reste dudit chemisage interne et se terminant à une certaine distance de l'extrémité de ladite pièce de raccordement. L'extrémité de ladite pièce de raccordement n'est donc plus chemisée après usinage.

Ceci permet de réaliser l'insertion en force d'un manchon tubulaire tel que décrit ci-après et conformément à la demande de brevet FR 0411055.

La présente invention fournit également un procédé d'assemblage d'une conduite comprenant l'assemblage d'une pièce de raccordement selon l'invention avec un dit élément de conduite.

Selon une première variante du procédé de raccordement selon l'invention, plus approprié notamment pour raccorder des conduites destinées à être mises en oeuvre dans des conditions de pression interne à la conduite inférieure à 30 bars (3 MPa) :
- la dite pièce de raccordement comprend une dite première bride de liaison à laquelle elle est soudée, dont l'ensemble de la surface interne de la pièce de raccordement et de ladite première bride de liaison ainsi que la face externe d'appui de ladite première bride contre ladite deuxième bride sont revêtus d'une dite couche continue de matériau thermoplastique, et
- le dit élément de conduite comprend à son extrémité une dite deuxième bride de liaison à laquelle elle est soudée, dont l'ensemble de la surface interne dudit élément de conduite et de ladite deuxième bride de liaison ainsi que la face externe d'appui de ladite deuxième bride contre ladite première bride sont revêtus d'une dite couche continue de matériau thermoplastique, et
- on raccorde l'une à l'autre lesdites première et deuxième bride de liaison de préférence contre un joint intercalaire.

Dans cette première variante du procédé d'assemblage, il n'est pas nécessaire de mettre en oeuvre un manchon tubulaire de jonction pour assembler ladite pièce de jonction et un dit élément de conduite.

Selon une deuxième variante de réalisation du procédé d'assemblage selon l'invention, plus approprié notamment pour raccorder des conduites destinées à être mises en oeuvre dans des conditions de pression interne à la conduite supérieure à 30 bars (3 MPa), on met en oeuvre un manchon tubulaire de jonction et on insère ledit manchon de jonction à l'intérieur de l'extrémité tubulaire ouverte de ladite pièce de raccordement par un coté dudit manchon, lequel manchon présente sensiblement le même diamètre interne que ledit chemisage interne de ladite pièce de raccordement.

Dans un premier mode de réalisation de cette deuxième variante du procédé d'assemblage selon l'invention, approprié pour une mise en oeuvre du raccordement en surface, notamment depuis un navire de pose :
- on insère ledit manchon de jonction :

- par un coté dudit manchon, à l'intérieur de l'extrémité tubulaire ouverte de ladite pièce de raccordement, celle-ci étant dépourvue de bride de liaison, et
- par l'autre coté dudit manchon, à l'intérieur de l'extrémité correspondante dudit élément de conduite, celle-ci étant dépourvue de dite bride de liaison, et
- on rapproche et soude entre elles les extrémités de ladite pièce de raccordement et dudit élément de conduite par-dessus ledit manchon de jonction.

Plus particulièrement dans ce premier mode de réalisation de cette deuxième variante, on réalise les étapes dans lesquelles :
a) on met en oeuvre des dite pièce de raccordement, dit élément de conduite et dit manchon tubulaire de jonction tels que :
   - les chemisages internes en matériau thermoplastique des extrémités ouvertes de ladite pièce de raccordement et dudit élément de conduite comportent chacune une partie terminale d'épaisseur réduite par rapport à l'épaisseur du reste dudit chemisage, et
   - le dit manchon présente à chacune de ses extrémités une partie terminale d'épaisseur réduite par rapport à l'épaisseur de la partie centrale dudit manchon, ladite partie terminale du manchon définissant une surface externe de révolution de diamètre externe inférieure au diamètre interne des extrémités terminales non chemisées de ladite pièce de raccordement et dudit élément de conduite, ledit manchon présentant sensiblement le même diamètre interne que ledit chemisage interne des parties courantes des pièces de raccordement et dudit élément de conduite, et
b) on insère ledit manchon tubulaire de jonction à l'intérieur desdites extrémités tubulaires ouvertes de chemisage d'épaisseur réduite de ladite pièce de raccordement et dudit élément de conduite, de manière à chevaucher lesdites parties terminales d'épaisseur réduite de chemisage.

Dans un second mode de réalisation de cette deuxième variante du procédé d'assemblage selon l'invention, approprié pour une mise en oeuvre au fond de la mer et notamment à grande profondeur, on réalise les étapes dans lesquelles:
a) on met initialement en oeuvre :
   - une dite pièce de raccordement comprenant une dite première bride de liaison à laquelle elle est soudée, dont l'ensemble de la surface interne de la pièce de raccordement et de ladite première bride de liaison est revêtu d'une dite couche de matériau thermoplastique, et
   - un dit élément de conduite comprenant à son extrémité une dite deuxième bride de liaison à laquelle elle est soudée, dont l'ensemble de la surface interne dudit élément de conduite et de ladite deuxième bride de liaison est revêtu d'une dite couche de matériau thermoplastique, et
b) on réalise l'usinage des chemisages internes en matériau thermoplastique des extrémités de ladite pièce de raccordement comprenant une dite première bride et dudit élément de conduite, comprenant une dite deuxième bride de manière à créer dans chacun desdits chemisages internes une partie terminale d'épaisseur réduite par rapport à l'épaisseur du reste dudit chemisage, et se terminant à une certaine distance respectivement desdites extrémités de la dite pièce de raccordement et dudit élément de conduite de sorte que les surfaces internes desdites première et deuxième brides ne sont pas chemisées, et
c) on insère à chacune des extrémités ouvertes desdites première et deuxième brides, des demi-manchons tubulaires de jonction destinés à réaliser les jonctions entre ladite pièce de raccordement et ladite première bride et respectivement entre ledit élément de conduite et ladite deuxième bride,
   - chaque dit demi-manchon présentant :
      - à son extrémité avant une partie terminale avant de paroi tubulaire d'épaisseur réduite par rapport à la partie centrale de la paroi tubulaire desdits demi- manchons, et
      - à son extrémité arrière une partie terminale arrière de paroi tubulaire de plus grande épaisseur que la partie centrale desdits demi-manchons,
      - chaque demi-manchon étant inséré de manière à ce que lesdites parties terminales avant de paroi d'épaisseur réduite desdits demi-manchons se chevauchent avec lesdites parties terminales d'épaisseur réduite desdits chemisage de ladite pièce de raccordement et respectivement dudit élément de conduite, et
d) on soude lesdits demi-manchons avec lesdites première et respectivement deuxième brides au niveau desdites faces arrière desdits demi-manchons et faces externes d'appui desdites première et respectivement deuxième brides, et
e) on rapproche et fixe l'une à l'autre lesdites première et deuxième brides de liaison, de préférence en intercalant entre elles un joint torique, de préférence encore à étanchéité métal-métal.

Dans ce procédé les étapes a) à d) peuvent être réalisées en surface dans un site de fabrication, le cas échéant à bord d'un navire de pose de conduite, mais l'étapes e) peut ainsi être réalisée in situ sur le lieu de dépose, notamment à grande profondeur.

Avantageusement, on met en oeuvre desdits manchons tubulaires de jonction, ou le cas échéant dits demi manchons tubulaires de jonction qui sont en matériau résistant à la corrosion, de préférence du type acier inox ou alliage inconel, les brides de raccordement comprenant elles aussi une zone en matériau résistant à la corrosion, de préférence du type acier inox ou alliage inconel.

De préférence, les surfaces externes desdites parties terminales d'épaisseur réduite desdits manchons ou le cas échéant demi manchons sont des surfaces crantées, de préférence avec une extrémité sensiblement effilée en biseau permettant son insertion et ancrage contre les surfaces internes des parties terminales d'épaisseur réduite des chemisages correspondants, réalisant ainsi une liaison mécanique entre lesdites surfaces externes desdits manchons ou demi manchons et surface interne desdits chemisages d'épaisseur réduite, par simple encastrement en force desdits manchons ou le cas échéant demi manchons dans la direction longitudinale axiale à l'intérieur desdites extrémités ouvertes respectivement de ladite pièces de raccordement, dudit élément de conduite ou le cas échéant desdites première et respectivement deuxième brides.

On entend par "interne" et "externe", interne et respectivement externe à la pièce de raccordement, à la conduite, au manchon ou demi-manchon selon les cas.

La surface interne de chacune des parties terminales de chemisage est sensiblement cylindrique et flue lors de l'insertion en force dudit manchon et de la déformation élastique de sa surface externe crantée par pression de la surface externe crantée de celui-ci contre ladite surface interne du chemisage.

Plus particulièrement, la présente invention a pour objet des pièces de raccordement et conduite aptes à être posées en milieu sous-marin à grande profondeur, de préférence jusqu'à 3000m, et lesdits éléments de conduite ont une longueur de 20 à 50m.

Plus particulièrement encore, il s'agit d'une conduite destinée à l'injection d'eau, notamment d'eau de mer, voire de l'eau de mer non

Dans un mode de réalisation, on injecte un dit matériau réticulable ou dit gel, à travers un trou préalablement percé dans la paroi dudit manchon ou ladite paroi en acier de la conduite ou pièce de raccordement et par l'intermédiaire d'une chambre à vide adapté au regard dudit trou, après avoir réalisé le vide dans ladite chambre annulaire, puis on démonte ladite chambre à vide et on bouche ledit trou.

D'autres caractéristiques et avantages de la présente invention apparaîtront à la lumière de la description détaillée qui va suivre, en référence aux figures suivantes dans lesquelles :
- la figure 1 est une coupe en vue de côté d'une pièce de raccordement du type coude chemisé équipé à sa partie inférieure d'une première bride de liaison au regard de l'extrémité d'un élément de conduite équipé d'une deuxième bride de liaison,
- les figures 1a et 1b sont des sections selon les plans AA et BB relatives à la figure 1,
- la figure 2 est une représentation en perspective du principe de roto chemisage,
- la figure 3 est une coupe en vue de côté d'un coude 1a-1 équipé d'une première bride 6a, en phase finale de roto chemisage,
- la figure 4 est une variante de la figure 3 dans laquelle le roto chemisage est effectué sous forte pression,
- la figure 5 est une coupe en vue de côté de l'assemblage d'une pièce de raccordement la selon l'invention sur une conduite 1b, à l'aide d'un manchon tubulaire de jonction ,
- les figures 6a et 6b sont des coupes en vue de côté de l'extrémité d'une pièce de raccordement chemisée en fin de processus de roto chemisage respectivement avant (fig.6a) et en cours (fig.6b) d'usinage de ladite chemise,
- la figure 7 détaille la surface crantée 3-2 de l'extrémité du manchon tubulaire de jonction 3.
- la figure 8a est une coupe en vue de côté d'une pièce de raccordement du type coude 1a-1 chemisée équipée d'un manchon de jonction 3 à son extrémité droite prêt à être assemblé par insertion, à une longueur unitaire de conduite 1b,

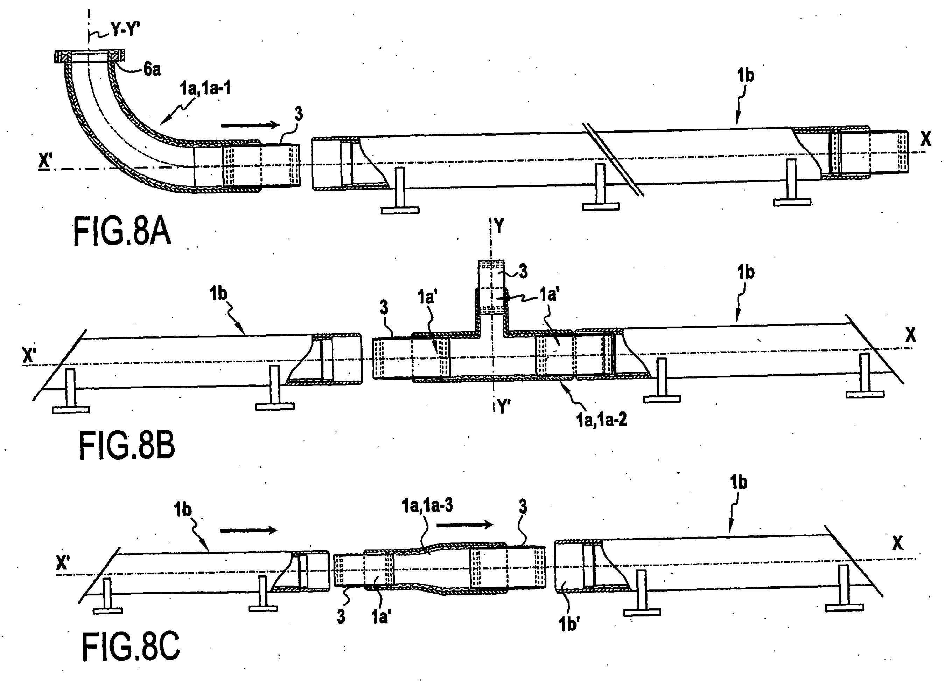

- les figures 8a à 8c sont des coupes en vue de côté d'une pièce de raccordement du type coude (fig.8a), té (fig.8b) et manchon de rétrécissement (fig.8c) équipée d'un manchon de jonction à son extrémité après être assemblée par insertion à une longueur unitaire de conduite,

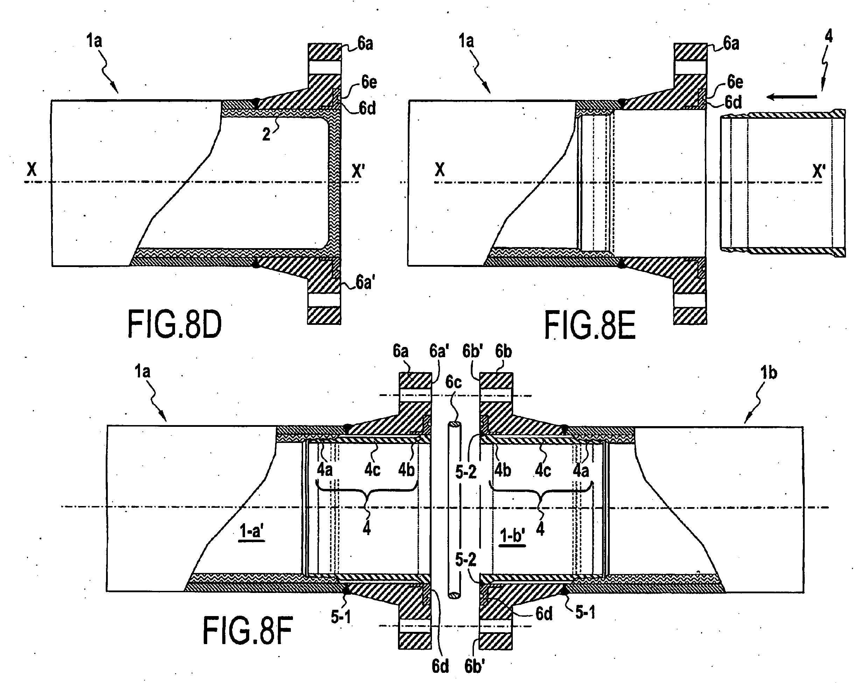

- les figures 8d et 8e sont des coupes en vue de côté de l'extrémité tubulaire d'une pièce de raccordement équipée d'une première bride de liaison avant (fig.8d) et après (fig.8e) usinage de l'extrémité de son chemisage interne,
- la figure 8f représente l'extrémité d'une dite pièce de raccordement équipée d'une première bride de liaison, en vis-à-vis de l'extrémité d'un élément de conduite équipé d'une deuxième bride de liaison et à l'intérieur desquels sont insérés des demi manchons tubulaires de jonction,

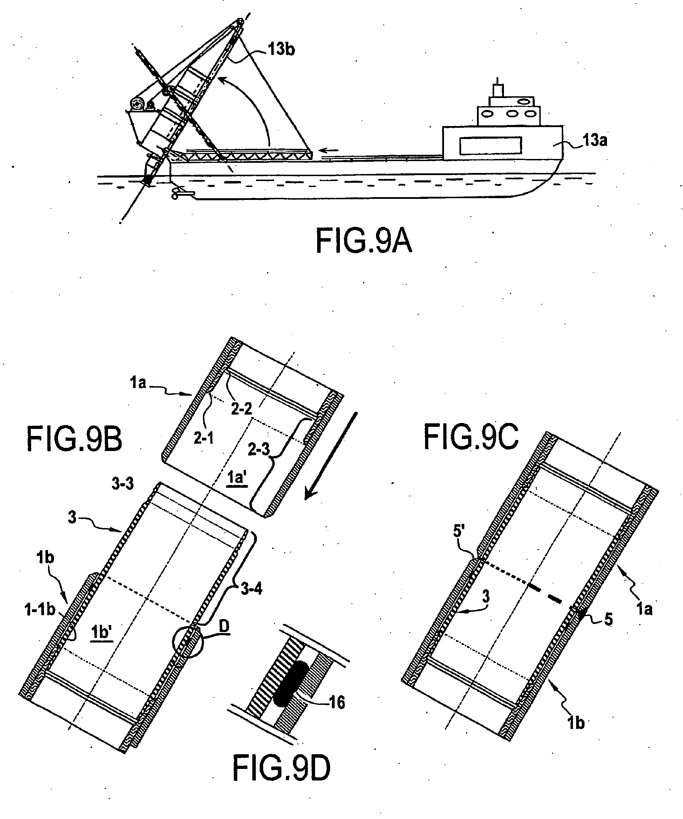

- la figure 9a représente en vue de côté un navire d'installation équipé d'une tour de pose dite en "J",
- les figures 9b et 9c sont des coupes en vue de côté des phases d'assemblage des extrémités tubulaires d'une pièce de raccordement et d'un élément de conduite chemisés, respectivement en phase d'approche (fig.9a) et en phase de soudage (fig.9b),
- la figure 9d est une section relative à la figure 9b détaillant la position de cales de centrage proches de la zone de soudage,

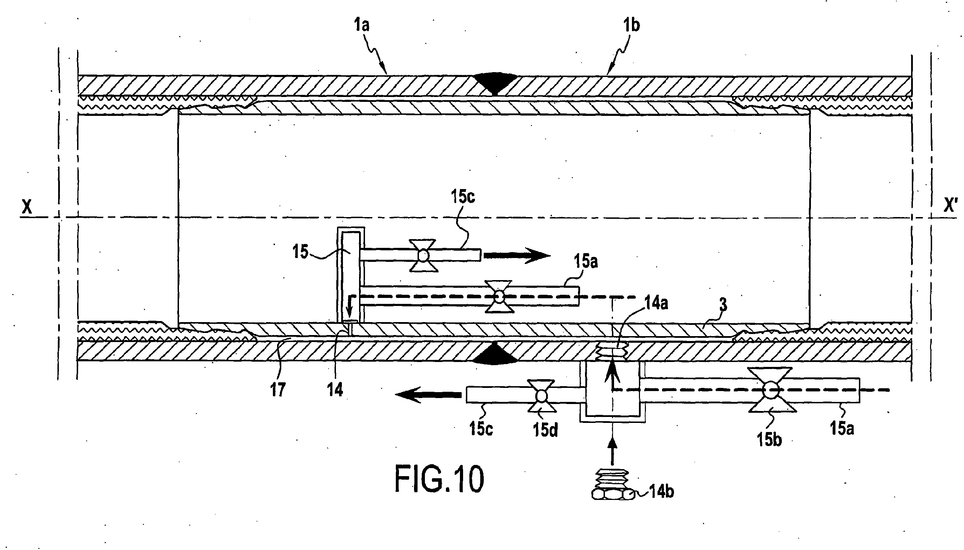

- la figure 10 est une coupe au niveau du raccordement du manchon tubulaire de jonction et de la chemise, détaillant un mode d'injection d'un fluide dans la chambre annulaire comprise entre ledit manchon, les extrémités des chemises, et la paroi de conduite en acier, soit depuis l'extérieur, soit depuis l'intérieur,

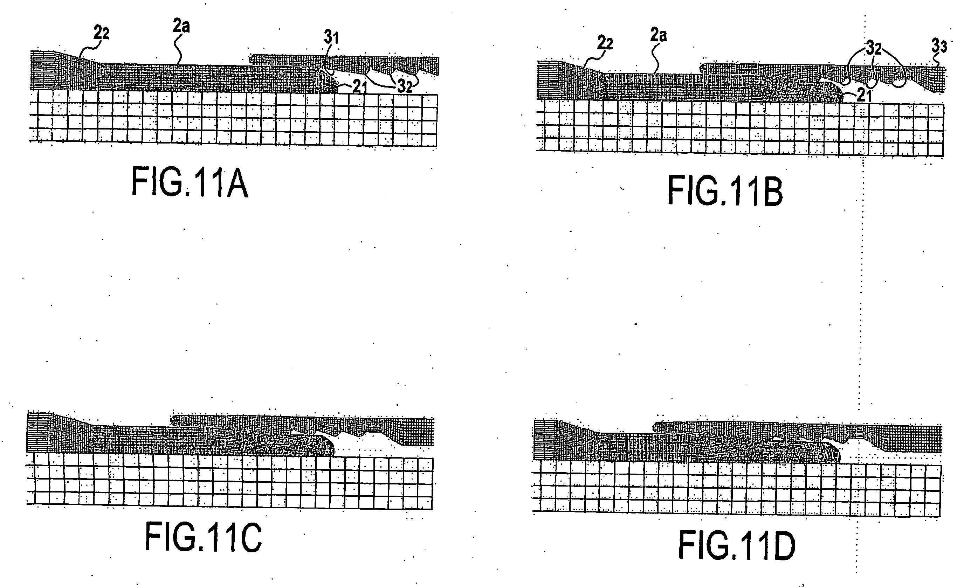

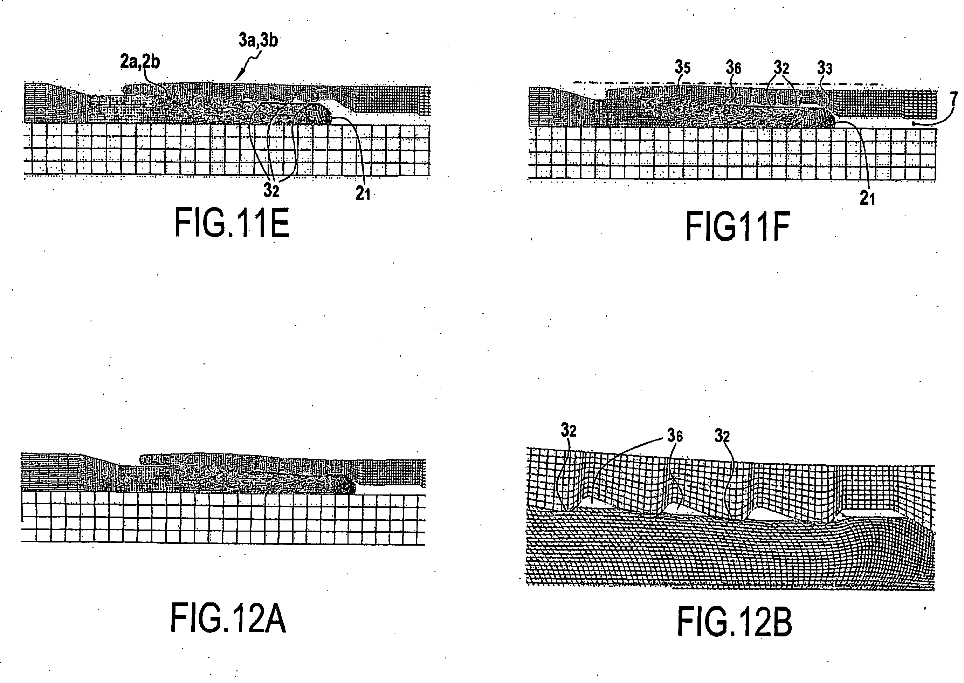

- les figures 11a-11f sont des schémas résultant de calculs en éléments finis détaillant 6 phases de l'insertion des manchon et demi manchon et montrant la déformation de leur surface crantée ainsi que le fluage du matériau souple constituant la chemise,
- la figure 12a est un résultat de calcul en éléments finis détaillant la déformation des manchon et demi manchon à surface crantée et la plastification de la chemise lorsque la conduite est soumise à une pression interne, la chambre comprise entre ledit manchon, les extrémités des chemises, et la conduite en acier, restant sensiblement à la pression atmosphérique,
- la figure 12b est un détail de la surface externe crantée du manchon, correspondant à la figure 12a,

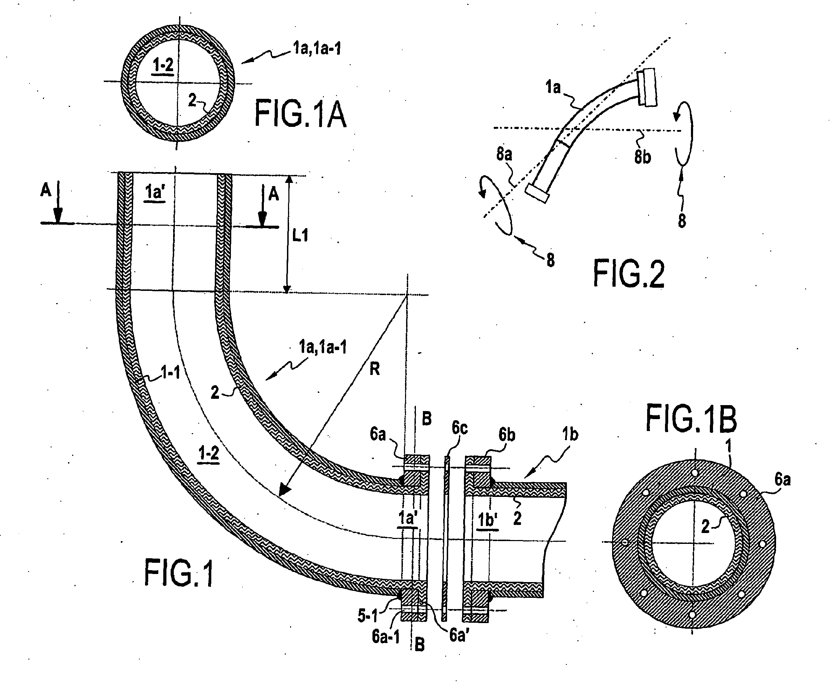

Sur la figure 1, on a représenté une pièce de raccordement du type coude 1a-1 chemisé 2 selon l'invention comprenant une extrémité tubulaire ouvert 1a' supérieure à raccorder par soudure sur un élément de conduite rectiligne 1b chemisé, et une extrémité tubulaire ouverte 1a' inférieure sur laquelle a été soudée 5-1 une première bride 6a, ledit chemisage 2 s'étendant de manière continue sur la face d'appui externe 6a' jusqu'à la périphérie de ladite bride 6a. Ladite première bride 6a est destinée à être fixée à une deuxième bride de liaison 6b à l'extrémité d'un élément de conduite 1b, avec un joint intercalaire 6c. Les figures 1a et 1b représentent les sections, respectivement en vue de dessus et en vue de côté selon les plans respectifs AA et BB. Le coude en acier est constitué d'une partie cintrée de rayon R, prolongée vers le haut par une partie droite de longueur L1 de diamètre sensiblement identique à celui de la partie cintrée. Le chemisage est d'épaisseur sensiblement constante sur l'intégralité de la surface interne de la pièce de raccordement y compris celle de ladite bride.

Dans le cas de conduites en acier de forte épaisseur, la partie cintrée est obtenue en général par chauffage à induction localisé jusqu'à une température de 800-900°, associé à un cintrage mécanique au rayon de courbure recherché. Ce processus nécessite en général une partie droite de conduite à chacune des extrémités de manière à ce que l'ensemble puisse être maintenu dans la machine de cintrage à induction. Une autre méthode, utilisée pour les épaisseurs faibles, consiste à rapporter une partie droite par soudure sur un coude d'angle donné, cintré au rayon souhaité.

Sur la figure 2 on a représenté en perspective le principe de chemisage par roto moulage, connu de l'homme de l'art, et qui consiste à mettre en rotation dans l'espace, en général de manière pseudo aléatoire selon deux axes 8a,8b, en général perpendiculaires entre eux, un moule de forme, au sein duquel on a introduit des granules de matériau thermoplastique, tel que du polyéthylène, du polypropylène, du polyamide, ou encore du PVDF ou du PEEK, et que l'on chauffe progressivement, de préférence dans un four, à une température où les granules atteignent leur température de fusion, de préférence à 20-40° au-dessus de ladite température de fusion. Les granules fondus se collent alors à la paroi du moule et du fait que le moule est mis en rotation pseudo aléatoire selon deux axes, l'épaisseur de la paroi croît de manière sensiblement uniforme sur toute la surface interne du moule. Lorsque tous les granules sont fondus, on continue la rotation et l'on refroidit la paroi externe de la pièce de raccordement faisant office de moule, soit à l'air libre, soit dans un courant d'air, soit encore en l'aspergeant d'eau. Lorsque le moule est froid, on ouvre le moule et l'on retire la pièce roto moulée, le démoulage s'effectuant en général sans difficultés, car le matériau thermoplastique présente un retrait de 1 à 3% selon le matériau.

Dans le cas du chemisage interne d'une pièce de raccordement selon l'invention, tel un coude ou un té, la pièce de raccordement fait office de moule perdu, et la chemise 2 reste en place. D'autre part, l'on cherche à minimiser, voire à supprimer le retrait, de manière à ce que le matériau thermoplastique soit en contact intime avec la surface interne 1-1 de ladite pièce de raccordement, et on cherche à améliorer l'adhérence de ladite chemise sur ladite conduite. Ainsi, l'accessoire lui-même joue le rôle de « moule perdu », car la chemise reste en place de manière définitive, alors que dans l'art antérieur le moule est ouvert et la pièce finie extraite dudit moule.

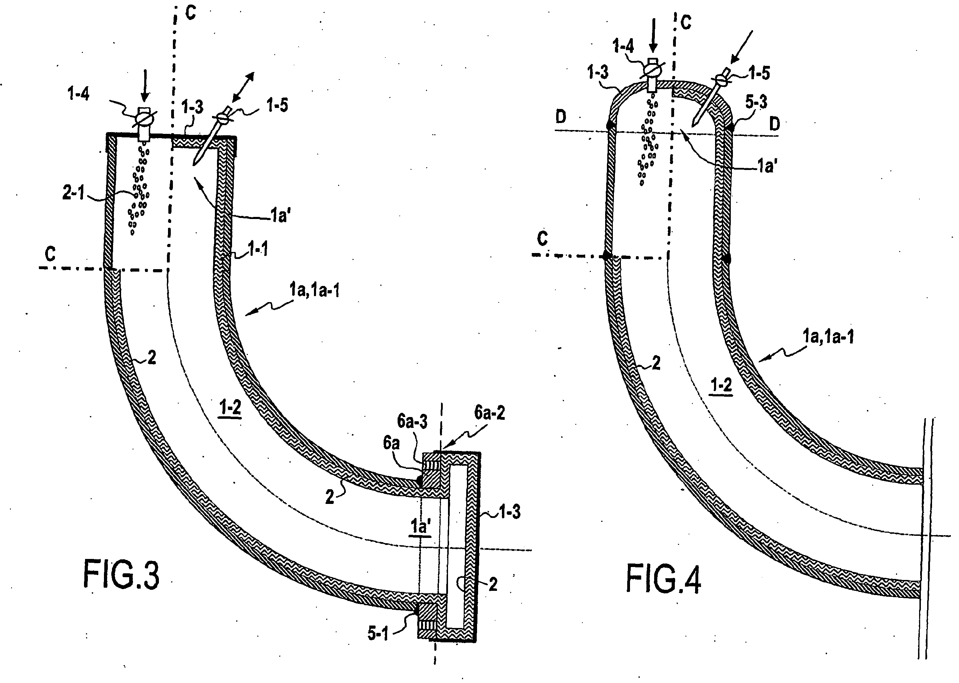

Dans une version préférée de l'invention représenté sur la figure 3, le coude en acier 1a-1 terminé vers le haut par une partie droite et vers le bas par une première bride, est muni d'un couvercle 1-3 à chacune de ses extrémités 1a' de manière à rendre étanche le volume interne 1-2 du coude. Dans la partie haute, on installe un orifice de remplissage 1-4 équipé d'une vanne d'isolation, ainsi qu'un orifice de ventilation 1-5, dont la finalité sera expliquée plus avant dans la description qui suit. Les granulats 2-1 sont introduits par ledit orifice de remplissage 1-4, comme représenté dans la partie haute de la figure à gauche de la coupe CC, puis l'ensemble est fixé dans la machine de rotation 8 à deux axes 8a,8b. L'ensemble est alors mis en chauffe et en rotation lente jusqu'à ce que les granules 2-1 qui restent en position basse du volume interne de ladite pièce, soient intégralement fondus et collés à la zone de la paroi en contact avec lesdits granules, comme représenté sur la partie basse et à gauche de ladite coupe CC. Lors de la mise en place des couvercles de fermeture 1-3, on aura pris soin de boucher provisoirement les trous de boulon 6a-3 de la bride 6a. La rotation pseudo aléatoire de la pièce pendant toute la durée du cycle de chauffage et de refroidissement permet de recouvrir de proche en proche, et de manière régulière, toute la surface interne de ladite pièce. Après refroidissement de l'ensemble, on enlève les couvercles 1-3 et côté bride, on découpe le matériau thermoplastique à ras 6a-2 de la face libre du chemisage dudit matériau et l'on contre perce les trous correspondant au trous 6a-1 de la bride, après avoir enlevé les bouchons 6a-3 obturant lesdits trous de ladite bride, comme représenté sur la figure 1.

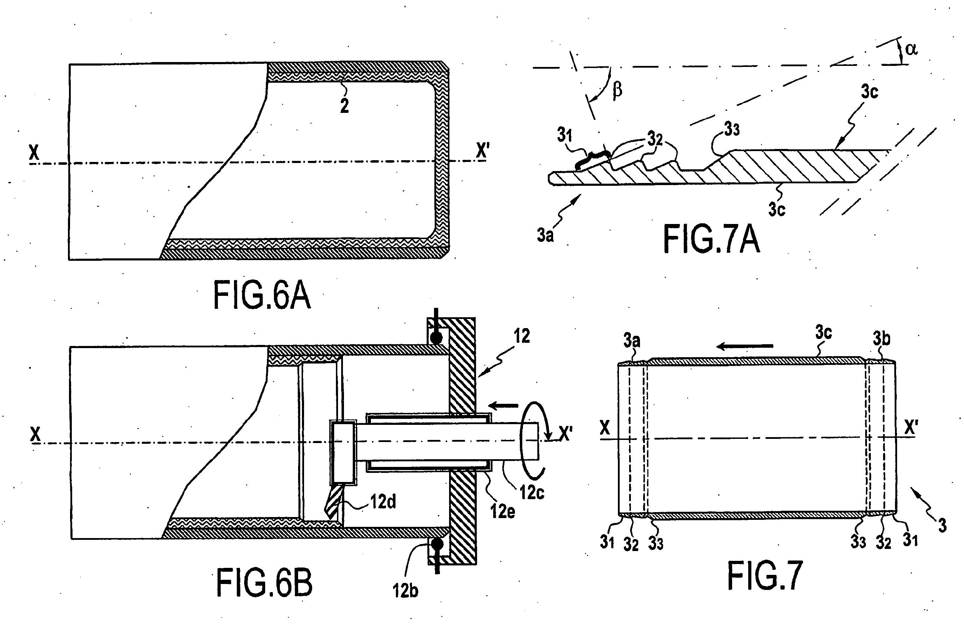

En revanche, sur la figure 1, l'extrémité tubulaire ouverte 1a' supérieure de ladite pièce de raccordement est destinée à être usinée comme représenté sur les figures 6a-6b qui seront détaillées plus avant ci-après.

Pour la clarté des dessins, la couche thermoplastique a été représentée avec une épaisseur uniforme et des raccordements à angle droit, mais en réalité ladite couche présentera une épaisseur sensiblement constante et des arrondis prononcés dans chaque angle, et en particulier dans la zone de la face de la bride.

Cette méthode s'applique particulièrement dans les cas de matériaux thermoplastiques à faible retrait, par exemple le polyéthylène basse densité (PEBD) ce qui permet d'avoir sensiblement un contact intime entre la chemise thermoplastique et la paroi tubulaire acier.

Dans une version préférée représentée sur la figure 4 relative à des coudes 1a-1 sans bride d'extrémité, on ferme au préalable chacune des extrémité de la conduite à l'aide d'un fond bombé 1-3 soudé 5-3, l'ensemble est alors capable de résister à une pression interne importante, voire considérable, puis l'on remplit le volume interne 1-2 de la quantité requise de granules 2-1, enfin l'on chauffe et l'on met en rotation la pièce. Lors du chauffage, la pression du gaz emprisonné augmente en raison de la température. Et, en fin de cycle, on pressurise avantageusement par l'orifice de purge 1-5 le volume interne 1-2 à une pression plus importante, par exemple 15 ou 20 bars, voire plus, de manière à maintenir fermement plaquée, pendant toute la phase de refroidissement, la chemise sur la paroi interne de la conduite tubulaire et résorber les microbulles de gaz piégées dans l'épaisseur du chemisage à l'état pâteux avant refroidissement. En fin de refroidissement, on relâche la pression et l'on découpe la pièce de raccordement perpendiculairement à son axe, selon le plan DD, à chacune des extrémités 1a'. La chemise 2 reste alors intimement liée avec la paroi acier de la surface interne 1-1 de la dite pièce de raccordement et l'on évite ainsi tout retrait. Pour améliorer l'adhérence entre ladite chemise 2 et ladite surface interne 1-1, on effectue avantageusement un sablage préalable de l'intérieur de la conduite, ce qui augmente la rugosité de surface et l'accrochage de la résine thermoplastique.

Cette méthode s'applique particulièrement dans les cas de matériaux thermoplastiques à fort retrait, tel le polyéthylène haute densité (PEHD), ce qui permet de garantir un contact intime entre la chemise thermoplastique et la paroi en acier quel que soit le matériau thermoplastique choisi. Pour éviter l'utilisation d'air ou de gaz sous pression, on pressurisera avantageusement la pièce de raccordement avec de l'eau à haute température, que l'on refroidira avantageusement par circulation vers un échangeur de chaleur qui lui permettra de perdre des calories tout en maintenant le niveau de pression souhaité, jusqu'à ce que l'ensemble soit complètement refroidi.

La machine de roto chemisage est constituée d'un axe primaire constitué d'un arbre horizontal actionné par une première motorisation et tournant à une vitesse variable de 0 à 10 tours/minute, à l'extrémité duquel est installé un axe secondaire constitué d'un second arbre en général perpendiculaire au premier et actionné par une seconde motorisation et tournant à une vitesse variable de 0 à 10 tours/minute. Un châssis solidaire de ce second arbre supporte la pièce de raccordement. Ladite pièce de raccordement est préalablement remplie de granules de matériau micronisés, c'est-à-dire de particules de granulométrie en général inférieure à 500-800µ. Le poids de poudre est calculé très exactement à partir de la surface interne à recouvrir et de l'épaisseur désirée de la chemise. L'ensemble est alors mis dans un four, de préférence à air pulsé, à une température d'environ 250° pour le polyéthylène et d'environ 300° pour le polypropylène, et la rotation est maintenu sur les deux dits axes pendant une durée 60 à 200' pour obtenir une épaisseur de 12 à 15mm de chemisage. L'ensemble est alors sorti du four pour la phase de refroidissement durant laquelle la rotation est maintenue sur les deux axes, jusqu'à ce que la pièce de raccordement soit à température ambiante. En début de refroidissement, on pressurise avantageusement la cavité interne à une pression importante, par exemple 15-30 bars pour maintenir la chemise parfaitement plaquée contre la paroi interne de ladite pièce de raccordement. On accélère avantageusement le refroidissement en créant un courant d'air frais, ou en arrosant l'ensemble depuis l'extérieur, ou encore en combinant courant d'air et arrosage. On accélère aussi avantageusement ledit refroidissement en faisant circuler de l'air frais à l'intérieur de la cavité de la chemise, par exemple par l'orifice 1-5, en ayant pris soin de prévoir un second orifice similaire, situé de préférence à l'extrémité opposée de la pièce de raccordement, l'air chaud, donc les calories en provenance de la cavité interne, étant alors évacué par ledit second orifice.

Après quelques essais, la quantité de poudre nécessaire est ajustée pour obtenir l'épaisseur désirée sur toute la surface et, en cas de surépaisseur locale, celle-ci correspondant localement à un transfert thermique trop important, ledit transfert thermique est avantageusement réduit en installant localement des tampons isolants à l'extérieur de ladite pièce de raccordement.

A titre d'exemple, un élément de raccordement coudé correspondant à la figure 3 constitué d'une conduite de 30cm de diamètre interne comportant une longueur droite de 40cm et d'un coude à 90° de rayon de courbure interne de 100cm, équipé à son extrémité inférieures d'une bride de 40cm de diamètre extérieur, et d'un bouchon à chaque extrémité, nécessite un volume de 32.6 litres de résine compacte, donc un poids de 30.6kg de PEHD (polyéthylène haute densité) de densité 0.94, pour obtenir une chemise interne de 15mm d'épaisseur. Le cycle de chauffage dure environ 90' à une température du four de 265°C. Le refroidissement s'effectue sous air ambiant pulsé pendant une durée de 90 à 120'.

De même, un élément de raccordement en forme de té, sans brides, constitué d'une conduite principale de 30cm de diamètre interne et de 160cm de longueur, fermé à chaque extrémité par un bouchon, et d'un piquage de 12cm de diamètre interne, lui aussi fermé par un bouchon, nécessite un volume de 25.8 litres de résine compacte, donc un poids de 24.2kg de PEHD de densité 0.94, pour obtenir une chemise interne de 15mm d'épaisseur. Les paramètres des cycles de chauffage et de refroidissement sont sensiblement similaires à ceux de la pièce de raccordement coudée.

De même, un élément de raccordement de réduction, sans brides, constitué d'une conduite principale de 30cm de diamètre interne et de 30cm de longueur, d'une conduite de diamètre réduit de 20cm de diamètre interne et de 30cm de longueur, et d'une zone de transition de 30cm de longueur, fermé à chaque extrémité par un bouchon, nécessite un volume de 10.5 litres de résine compacte, donc un poids de 9.8kg de PEHD de densité 0.94, pour obtenir une chemise interne de 15mm d'épaisseur. Les paramètres des cycles de chauffage et de refroidissement sont sensiblement similaires à ceux de la pièce de raccordement coudée.

Sur les figures 1 et 8a on a représenté une pièce de raccordement la qui est revêtu d'un chemisage interne 2 selon la présente invention, constituée d'un élément de conduite 1a-1 apte à permettre le raccordement de 2 éléments de conduite dans 2 directions perpendiculaires à chacune de ses extrémités tubulaires ouvertes 1a'.

Sur la figure 8b, on a représenté une pièce de raccordement chemisée selon l'invention, qui est un élément en forme de té apte à permettre le raccordement de 3 éléments de conduite à chacune de ses extrémités tubulaires 1a', à savoir :
- 2 éléments de conduite 1b coopérant avec les 2 extrémités tubulaires 1a' opposées disposés à 180°, et
- un troisième élément de conduite, de diamètre plus faible, disposé à 90° par rapport aux 2 autres éléments de conduite 1b alignés, ledit troisième élément de conduite 1b coopérant avec les extrémités tubulaires ouvertes 1a' dont l'axe est disposé à 90° par rapport à l'axe des 2 autres extrémités tubulaires ouvertes 1a' dudit élément en té 1a-2.

Sur la figure 8c, on a représenté une pièce de raccordement constituée d'un manchon tubulaire de rétrécissement 1a-3 présentant 2 extrémités tubulaires ouvertes 1a' disposées selon un même axe XX', mais dont le diamètre interne de la section transversale circulaire de l'une des extrémités ouvertes tubulaires 1a' est inférieur au diamètre interne de l'autre extrémité tubulaire ouverte de ladite pièce de raccordement.

Ces 3 pièces de raccordement 1a-1, 1a-2, 1a-3, comportent une surface interne revêtue d'un chemisage en couche de matériau thermoplastique 2 qui est de forme non entièrement cylindrique. Dans les pièces de raccordement en forme de té 1a-2 et en forme de manchon tubulaire de rétrécissement 1a-3, ladite surface interne comprend respectivement la combinaison de 2 parties cylindriques disposées à 90° (pièce de raccordement la-2) et disposées bout à bout (pièce de raccordement 1a-3).

Dans une version préférée de l'invention, on réalise un chemisage multicouche de manière à obtenir une première couche de dit revêtement d'épaisseur donnée en contact avec la paroi, puis au moins une seconde couche d'un revêtement d'un matériau thermoplastique différent présentant en général des caractéristiques améliorées par rapport au précédent. Ledit second matériau est en général plus noble et donc plus coûteux que le premier, son épaisseur est donc réduite au minimum nécessaire. Le procédé de roto chemisage est alors légèrement différent du procédé précédemment décrit, car le second matériau thermoplastique en poudre micronisée est contenu dans un réservoir fermé solidaire d'un des couvercles et situé loin des parois de l'élément de raccordement. Lorsque le premier matériau est intégralement fondu et adhère aux parois, après un temps connu, le réservoir contenant le second matériau est ouvert, soit de manière automatique, grâce à une temporisation mécanique, soit de manière manuelle par l'opérateur agissant depuis l'extérieur. Le second matériau thermoplastique est alors libéré et commence sa fusion en recouvrant le premier matériau, jusqu'à ce que l'intégralité de la poudre micronisée soit fondue, ce qui permet alors d'obtenir l'épaisseur finale recherchée pour la chemise. Un tel multicouche permet ainsi d'obtenir un chemisage étanche à la migration des gaz ou/et des hydrocarbures, en intégrant un second matériau étanche aux gaz ou/et aux hydrocarbures, ledit second matériau étant avantageusement appliqué en couche mince de quelques millimètres seulement, en raison de son coût élevé. On peut de la même manière appliquer un second matériau constitué d'un mélange du premier matériau et d'un matériau d'addition, par exemple un matériau facilitant le glissement, tel un Téflon, ou encore améliorant la résistance à l'abrasion, ledit matériau d'addition étant dispersé en quantités très faible dans le matériau de base. On reste dans l'esprit de l'invention si l'on applique un troisième matériau, voire un quatrième ou plus, pour constituer l'épaisseur totale de la chemise.

Sur les figures 8a, 8b et 8c, on a représenté un mode d'assemblage entre une extrémité tubulaire ouverte 1a' d'une pièce de raccordement 1a, avec une extrémité tubulaire ouverte 1b' d'un élément de conduite 1b, à l'aide d'un manchon de jonction 3.

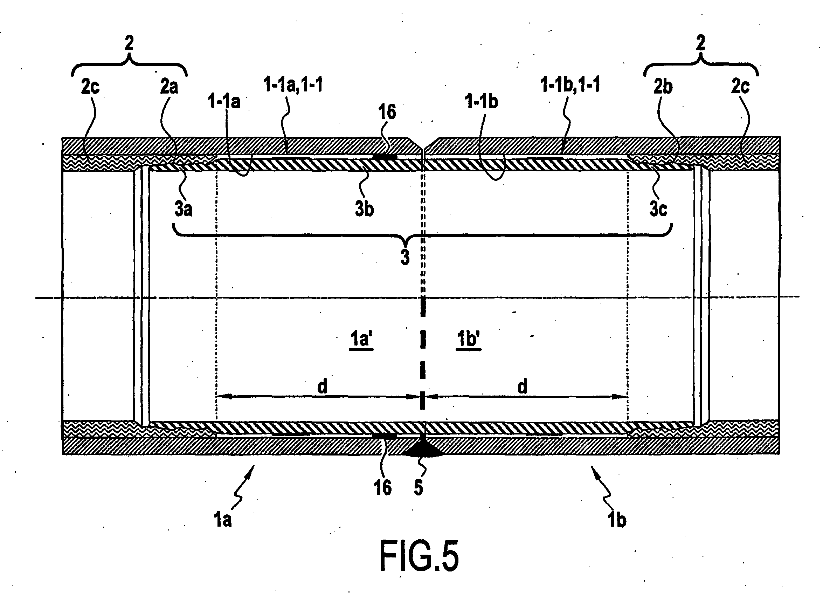

Dans le procédé selon l'invention, on insère le dit manchon de jonction 3 :
- par un coté dudit manchon, à l'intérieur de l'extrémité tubulaire ouverte 1a' de ladite pièce de raccordement, celle-ci étant dépourvue de bride de liaison, et
- par l'autre coté dudit manchon, à l'intérieur de l'extrémité correspondante1b' dudit élément de conduite, celle-ci étant dépourvue de dite bride de liaison, et
- on rapproche et soude 5 entre elles les extrémités de ladite pièce de raccordement et dudit élément de conduite par-dessus ledit manchon de jonction 3, comme représenté sur la figure 5.

Le manchon 3 présente sensiblement le même diamètre interne que le chemisage interne 2-2 de ladite pièce de raccordement.

Plus particulièrement, on réalise les étapes dans lesquelles :
a) on met en oeuvre des dite pièce de raccordement, dit élément de conduite et dit manchon tubulaire de jonction tels que :
   - les chemisages internes en matériau thermoplastique des extrémités ouvertes 1a',1b' de ladite pièce de raccordement et dudit élément de conduite comportent chacun une partie terminale d'épaisseur réduite 2a,2b par rapport à l'épaisseur du reste 2c dudit chemisage, ladite partie terminale 2a,2b définissant ainsi une surface interne de révolution de diamètre interne plus grand que celui du reste dudit chemisage interne et se terminant à une certaine distance d respectivement desdites extrémités de ladite pièce de raccordement et dudit élément de conduite, et
   - ledit manchon présente à chacune de ses extrémités une partie terminale 3a,3b d'épaisseur réduite par rapport à l'épaisseur de la partie centrale 3c dudit manchon, ladite partie terminale 3a,3b du manchon définissant une surface externe de révolution de diamètre externe inférieur à celui de la partie centrale 3c du manchon et inférieur au diamètre interne des extrémités terminales non chemisées de ladite pièce de raccordement et dudit élément de conduite et une surface interne cylindrique sensiblement de même diamètre interne que celui de la partie courante du chemisage desdites extrémités ouvertes tubulaires et de la partie centrale du manchon, lequel manchon 3 présente sensiblement le même diamètre interne que ledit chemisage interne des parties courantes des pièces de raccordement et dudit élément de conduite, et
b) on insère ledit manchon tubulaire de jonction à l'intérieur desdites extrémités tubulaires ouvertes de chemisage d'épaisseur réduite de ladite pièce de raccordement et dudit élément de conduite, de manière à chevaucher lesdites parties terminales d'épaisseur réduite de chemisage

Sur la figure 5, on a représenté un assemblage selon l'invention avec manchon de jonction tubulaire 3 assurant la jonction entre les extrémités tubulaires 1a', 1b' d'une pièce de raccordement 1a et d'un élément de conduite rectiligne 1b à chemisage interne 2, assemblés bout à bout. Lesdites extrémités tubulaires 1a' et 1b' sont soudées 5 l'une à l'autre et chaque dite extrémité tubulaire 1a', 1b' comprend :
- un chemisage interne en matériau plastique 2 thermoplastique, de préférence identique de chaque côté, présentant à chaque extrémité une partie terminale d'épaisseur réduite 2a, 2b par rapport à l'épaisseur de la partie courante 2c dudit chemisage, définissant une surface interne de révolution de diamètre interne plus grand que celui de la partie courante 2c dudit chemisage et se terminant à une certaine distance d de l'extrémité du dit élément de conduite, et d'axe XX' coïncidant sensiblement avec l'axe desdites extrémités tubulaires 1a', 1b', et
- un unique manchon tubulaire de jonction 3 en matériau résistant à la corrosion, de préférence en alliage inconel; sensiblement de même diamètre interne que ledit chemisage, intercalé à l'intérieur des extrémités bout à bout des deux extrémités tubulaires 1a', 1b', de manière à chevaucher lesdites parties terminales des deux chemisages 2a, 2b, ledit manchon présentant à chacune de ses extrémités une partie terminale 3a, 3b d'épaisseur réduite par rapport à l'épaisseur de la partie centrale 3c dudit manchon, lesdites parties terminales 3a, 3b du manchon définissant une surface externe de révolution de diamètre externe inférieur à celui de la partie centrale 3c du manchon et une surface interne cylindrique de même diamètre interne que celui de la partie courante du chemisage et de la partie centrale 3c du manchon, son axe XX' coïncidant sensiblement avec l'axe des extrémités tubulaires 1a', 1b'.

Sur la figure 7a, ladite surface externe de révolution de chaque partie terminale 3a, 3b dudit manchon est une surface crantée 3₂, notamment avec 3 à 5 crans 3₂ dont les inclinaisons de pente, telles que représentées sur la figure 4a, à savoir α est inférieur à 45°, de préférence de l'ordre de 30°, et β est supérieur à 45°, de préférence de l'ordre de 60°, permettant son insertion et ancrage contre la surface interne de la partie terminale d'épaisseur réduite 2a, 2b du chemisage correspondant, le cran d'extrémité confère au manchon une extrémité sensiblement effilée en biseau 3-1, comme représenté sur la figure 7a. On réalise ainsi une liaison mécanique entre les deux dites surfaces externe du manchon et interne du chemisage, par simple encastrement en force dudit manchon dans la direction longitudinale axiale à l'intérieur d'une dite extrémité tubulaire 1a', 1b'.

Le diamètre externe de ladite partie centrale 3c cylindrique du manchon est inférieure au diamètre interne des extrémités non chemisées 1-1a, 1-1b des parois en acier de dites extrémités tubulaires 1a', 1b', de sorte que ledit manchon n'est pas en contact direct avec lesdites parois en acier et délimite avec celles-ci et entre les extrémités 2-1 des chemises encadrant ledit manchon, une chambre annulaire 17.

Ledit manchon est inséré contre la partie terminale d'épaisseur réduite 2a, 2b, du chemisage jusqu'à ce que l'extrémité 2-1 du chemisage vienne buter contre un épaulement 3-3 délimitant la dite partie centrale 3c du manchon et la dite partie terminale de plus faible épaisseur 3a, 3b du manchon.

Dans une variante de réalisation non représentée, ledit manchon est inséré contre la partie terminale du chemisage jusqu'à ce que l'extrémité 3-1 du manchon vienne buter contre l'épaulement 2-2 délimitant la partie courante et la dite partie terminale 2a, 2b, d'épaisseur réduite du chemisage, ce qui réduit avantageusement les turbulences dans la zone de transition entre la partie courante de la chemise 2 et le manchon tubulaire de jonction.

Sur les figures 8d à 8f, on a représenté un autre mode d'assemblage équipé d'une première bride de liaison 6a en vue de l'assemblage avec une deuxième bride de liaison 6b d'un élément de conduite rectiligne 1b, plus particulièrement approprié pour un assemblage au fond de la mer dans des conditions de haute pression, notamment à grande profondeur.

Dans ce procédé, on réalise les étapes dans lesquelles :
a) on met initialement en oeuvre
   - une dite pièce de raccordement 1a comprenant une dite première bride de liaison 6a à laquelle elle est soudée 5-1, dont l'ensemble de la surface interne de la pièce de raccordement et de ladite première bride de liaison est revêtu d'une dite couche de matériau thermoplastique, la face externe d'appui 6a' de ladite première bride contre ladite deuxième bride n'étant pas revêtue d'une dite couche, et
   - un dit élément de conduite 1b comprenant à son extrémité une dite deuxième bride de liaison 6b à laquelle elle est soudée 5-1, dont l'ensemble de la surface interne dudit élément de conduite et de ladite deuxième bride de liaison est revêtu d'une dite couche de matériau thermoplastique, la face externe d'appui 6b' de ladite première bride contre ladite deuxième bride n'étant pas revêtue d'une dite couche, et
b) on réalise l'usinage des chemisages internes 2 en matériau thermoplastique des extrémités de ladite pièce de raccordement comprenant une dite première bride et dudit élément de conduite comprenant une dite deuxième bride de manière à créer dans chacun desdits chemisages internes une partie terminale d'épaisseur réduite 2a,2b par rapport à l'épaisseur du reste 2c dudit chemisage, ladite partie terminale définissant ainsi une surface interne de révolution de diamètre interne plus grand que celui du reste dudit chemisage, et se terminant à une certaine distance d respectivement desdites extrémités de ladite pièce de raccordement et dudit élément de conduite de sorte que les surfaces internes 1-1a,1-1b desdites première et deuxième brides ne sont pas chemisées, et
c) on insère à chacune des extrémités ouvertes desdites première et deuxième brides, des demi manchons tubulaires de jonction 4 destinés à réaliser les jonctions entre ladite pièce de raccordement et ladite première bride et respectivement entre ledit élément de conduite et la dite deuxième bride
   - chaque dit demi manchon 4 présentant :
      - à son extrémité avant une partie terminale avant de paroi tubulaire 4a d'épaisseur réduite par rapport à la partie centrale 4c de la paroi tubulaire desdits demi-manchons, et
      - à son extrémité arrière une parte terminale arrière de paroi tubulaire 4b de plus grande épaisseur que la partie centrale 4c desdits demi manchons, partie terminale arrière 4b dont le diamètre externe correspond sensiblement au diamètre de la surface interne 1-1a, 1-1b desdites première et respectivement deuxième brides non chemisées, chaque dite partie terminale arrière formant un épaulement, lesdites parties terminales 4a avant des demi manchons définissant une surface externe de diamètre externe inférieur à celui du reste 4c de la paroi des demi manchons et une surface interne cylindrique sensiblement de même diamètre que celui des surfaces internes cylindriques de la partie courante desdits chemisages de ladite pièce de raccordement et respectivement dudit élément de conduite et du reste de la paroi tubulaire des demi manchons,
      - chaque demi manchon étant inséré de manière à ce que lesdites parties terminales avant 4a de paroi d'épaisseur réduite desdits demi manchons 4 se chevauchent avec lesdites parties terminales d'épaisseur réduite 2a,2b desdits chemisage de ladite pièce de raccordement et respectivement dudit élément de conduite, et
      - lesdites parties terminales arrière (4b) desdits demi manchons formant épaulement se trouvent en contact avec lesdites première et respectivement deuxième brides du coté de leurs extrémités ouvertes, et
      - les extrémités arrière desdits demi manchons 4 arrivent au niveau des faces externes d'appui (6a', 6b') desdites première et respectivement deuxième brides, et
d) on soude 5-2 lesdits demi manchons avec lesdites première et respectivement deuxième brides au niveau desdites extrémités arrière desdits demi manchons et faces externes d'appui 6a',6b' desdites première et respectivement deuxième brides, et
e) on rapproche et fixe l'une à l'autre lesdites première et deuxième brides, en intercalant entre elles un joint torique, de préférence à étanchéité métal-métal.

Dans ce procédé, les étapes a) à d) peuvent être réalisées en surface dans un site de fabrication, le cas échéant, à bord d'un navire de pose de conduites, comme explicité ci-après. Mais l'étape e) peut ainsi être réalisée in situ sur le lieu de dépose, notamment à grande profondeur.

Les dits manchons tubulaires de jonction 3, et le cas échéant lesdits demi manchons tubulaires de jonction 4 sont en matériau résistant à la corrosion, de préférence du type acier inox ou alliage inconel, et
- le diamètre externe de la partie centrale 3c,4c cylindrique dudit manchon ou le cas échéant desdits demi manchons est inférieur au diamètre interne des extrémités non chemisées 1-1a, 1-1b des parois en acier respectivement de ladite pièce de raccordement 1a, dudit élément de conduite 1b ou le cas échéant desdites première 6a et deuxième 6b brides.

Les extrémités arrière non chemisées 1-1a,1-1b des surfaces internes desdites première et respectivement deuxième brides en contact avec lesdites parties terminales arrière 4b desdits demi manchons, et lesdites faces externes d'appui 6a',6b' dans la zone de soudage 6d desdites première et deuxième brides avec la partie terminale arrière 4b desdits demi manchons, sont revêtues localement d'un même métal anti-corrosion 6d que celui constitutif desdits demi manchons.

Le métal résistant à la corrosion sera de préférence un alliage inconel. Celui-ci peut être déposé dans la zone de contact et de soudage 6d entre lesdites brides et dits demi manchons 4 par dépose à l'arc électrique dans une zone préalablement usinée. Il est ensuite possible de réaliser une gorge 6e dans ladite zone 6d destinée à recevoir un joint intercalaire 6c torique. Lors du roto moulage, ladite bride 6a sera simplement obturée par une contre bride pleine munie d'un joint d'étanchéité, par exemple un joint métal-métal coopérant avec ladite gorge 6e. En procédant comme mentionné ci-dessus, on réalise une continuité de métal anti-corrosion, par exemple de l'inconel, entre ledit demi manchon, lesdites brides de liaison 6a et le joint, lui aussi en métal anti- corrosion 6c.

Comme représenté sur les figures 6a, 6b, en fin de processus de chemisage, la chemise est alors découpée à ras 6a-2 de la dite pièce de raccordement en acier, puis une machine d'usinage 12 est installée sur la face de la première extrémité de l'élément de conduite. Elle est constituée de façon connue d'un bâti 12a portant une motorisation, non représentée, qui met l'arbre porte-outil 12c en rotation, un dispositif 12e assure le déplacement du porte-outil dans la direction XX', un dispositif 12f assure le déplacement radial de l'outil d'usinage 12d. La machine est équipée de moyens de centrage 12b qui permettent d'ajuster l'axe XX' de ladite machine pour le faire coïncider avec l'axe de l'élément de conduite, et ainsi pouvoir usiner l'intérieur de la chemise à ses extrémités, de manière parfaitement concentrique à ladite conduite en acier.

Après usinage de la chemise selon le profil requis, à chacune des extrémités, le manchon tubulaire de jonction 3 de la figure 7 est enfoncée en force dans l'extrémité 1a' de la pièce de raccordement 1a qui est alors terminée et prête à être expédié sur le site d'assemblage.

Une extrémité tubulaire 1a' d'une dite pièce de raccordement dans laquelle un dit manchon tubulaire de jonction 3 inséré comprend un chemisage 2 avec une partie terminale d'épaisseur réduite 2a. Le dépassement dudit manchon définit une extrémité mâle 3-4 apte à être assemblée avec une extrémité dépourvue de dit manchon définissant une extrémité femelle 2-3 d'un dit élément de conduite 1b.

Un schéma inverse est aussi possible, avec le dit manchon constituant une extrémité mâle d'un dit élément de conduite 1b à inséré dans une extrémité femelle d'une dite pièce de raccordement.

Sur les figures 9a, 9b on a représenté l'assemblage entre une longueur unitaire de conduite 1b et d'une dite pièce de raccordement 1a chemisés, lors de l'installation sur site qui est effectuée à bord d'un navire de pose 13a équipé d'une tour de pose en J 13b, tel que représenté sur la figure 9a. A cet effet, l'élément de conduite terminal 1b d'une de conduite chemisée déjà posée est maintenu fixement en suspension en pied de tour, et une pièce de raccordement chemisée 1a est transférée, de manière connue, de la position horizontale à la position oblique correspondant à l'inclinaison de la tour pour être ensuite positionné dans l'axe de l'élément de conduite terminal 1b chemisé. La dite pièce de raccordement à assembler 1a est ensuite déplacée axialement vers l'élément de conduite terminal 1b en suspension. On introduit et insère en force l'extrémité femelle 2-3 dépourvue de manchon tubulaire de jonction d'un élément de conduite à assembler 1b autour de l'extrémité mâle 3-4 du manchon tubulaire de jonction fixe qui dépasse de la pièce de raccordement 1a dans la direction longitudinale XX' axialement à l'intérieur de la dite extrémité femelle 2-3, puis on réalise le soudage 5 des extrémités non chemisées des parois en acier des pièce de raccordement 1a et élément de conduite 1b bout à bout. La partie supérieure du manchon 3 pénètre dans l'extrémité de l'élément de conduite à assembler 1₂b, jusqu'à venir en contact avec l'extrémité 2-1 de la chemise préalablement usinée avec grande précision. Ledit manchon est inséré contre la partie terminale d'épaisseur réduite 2b du chemisage jusqu'à ce que l'extrémité 2-1 du chemisage vienne buter contre un épaulement 3-3 délimitant la dite partie centrale 3c du manchon et la dite partie terminale de plus faible épaisseur 3a, 3b du manchon.. La dite pièce de raccordement 1a étant proche de la verticale, son poids propre est suffisant pour permettre alors au manchon de pénétrer complètement la chemise pour atteindre la configuration de la figure 9c, où la dite pièce de raccordement et le dit élément de conduite sont maintenus à quelques mm de distance, par exemple par de simples cales non représentées, de manière à pouvoir effectuer, de manière connue, la soudure 5. Sur la figure 9c on a représenté en partie haute vers la gauche, les parois des conduites acier chanfreinées 5' distantes de quelques mm et en partie droite vers le bas la soudure 5 terminée.

Comme représenté sur les figures 9b, 9d, on installe avantageusement des cales 16, par exemple 3 cales uniformément espacées sur la périphérie du manchon tubulaire de jonction et situées à proximité de la zone de soudage 5, de manière à améliorer l'encastrement dudit manchon 3 dans ladite conduite en acier 1₁. Ces cales sont avantageusement usinées à une cote précise et enfoncées en force par insertion depuis l'extérieur dans l'intervalle compris entre la surface externe de la partie centrale 3c dudit manchon et la surface interne de la paroi en acier de l'extrémité non chemisée 1-1a, 1-1b de la dite pièce de raccordement ou de l'élément de conduite dont le dit manchon constitue une extrémité mâle.

Ces cales 16 sont avantageusement réalisées en matériau non conducteur, donc non métallique, et résistent à la température engendrée à leur emplacement considéré, par le processus d'assemblage par soudure à bord du navire d'installation 13a. Ainsi, elles seront réalisées soit en matériaux composites soit en céramique, ou encore plus simplement à partir d'un mortier de sable et de ciment. Dans une version préférée, la fabrication de ces cales sera simplement réalisée par injection à l'aide d'une seringue, d'un volume limité de mortier qui, en s'étalant, par exemple sur une surface 4 cm de diamètre créera in situ ladite cale, sans aucune nécessité d'ajustement préalable de l'épaisseur, bloquant ainsi de manière énergique ledit manchon par rapport à ladite conduite. La figure 9d illustre le détail de ce calage.

Au cas où le poids propre de la dite pièce de raccordement ou du dit élément de conduite serait insuffisant pour assurer l'insertion naturelle du manchon tubulaire de jonction, on alourdira avantageusement le chariot de manutention de ladite rame au sein de la tour de pose en J, de manière à disposer de la réserve de capacité d'effort suffisante. Dans une version préférée, on utilisera un dispositif de vérins qui, se fixant sur l'extérieur de la dite pièce 1a ou rame 1b la forcera lors de l'insertion du manchon tubulaire de jonction 3.

Dans une version préférée représentée sur les figures 1 et 9b, on disposé avantageusement autour du manchon tubulaire de jonction un agent passivant avant insertion lors de la fabrication de la rame, ou lors de l'installation au sein de la tour de pose en J; dans ce dernier cas, ledit agent de passivation est positionné dans la zone d'extrémité mâle 3-4.

Après jonction des pièce de raccordement et élément de conduite, la surface externe de la partie centrale des manchons ou demi-manchons et la surface interne correspondante de la paroi en acier de la partie terminale non chemisée de la dite pièce de raccordement , dit élément de conduite,ou le cas échéant dites première et deuxième brides, délimitent une chambre annulaire, de par la différence de leurs diamètres respectivement externe et interne. Ceci permet d'éviter tout contact direct entre l'alliage inox ou inconel du manchon et l'acier de l'élément de conduite. Un tel contact direct pourrait en effet conduire, en cas de pénétration d'eau dans la dite chambre lorsque la conduite est une conduite d'injection d'eau, à des phénomènes électrochimiques de corrosion de la conduite en acier dans la mesure ou ladite liaison mécanique entre le manchon et le chemisage n'est pas nécessairement étanche. L'absence de contact entre le manchon et la paroi en acier de la conduite, permet la mise en oeuvre d'une soudure classique du type utilisé couramment pour le soudage des pipelines et permet d'éviter une soudure coûteuse en alliage noble identique à celui éventuellement mise en oeuvre comme matériau constitutif dudit manchon, notamment de l'alliage inconel.

Toutefois, dans un mode de réalisation, ledit manchon tubulaire de jonction peut être réalisé en matériau composite du type carbone époxy, ledit manchon étant réalisé par exemple par enroulement filamentaire, sous forme d'ébauche, puis réusiné dans les zones d'extrémité pour former les crantages requis.

Dans une version préférée représentée sur la figure 10, la chambre annulaire 17 comprise entre le manchon, les extrémités 2-1 des chemises et la paroi externe en acier, est injectée à l'aide d'un matériau réticulable quasi-incompressible; tel un polyuréthanne, un époxy, un acrylique, ou encore un gel à consistance épaisse et insoluble dans l'eau, de manière à éliminer toute bulle d'air présente dans ladite chambre. A cet effet, on procède à l'injection du produit soit depuis l'extérieur de la conduite, comme représenté dans la partie basse de la figure 10, soit par l'intérieur, à travers le manchon tubulaire de jonction 3, comme représenté sur la partie haute de la même figure 10. En procédant depuis l'extérieur, on aura préalablement réalisé un trou fileté 14a traversant la paroi et mettant en communication ladite chambre avec l'extérieur. On vient plaquer sur l'extérieur de la conduite, de manière étanche, une chambre à vide 15 muni d'un conduit 15a d'amenée du matériau réticulable et d'une vanne d'isolation 15b, ainsi que d'un conduit 15c de tirage au vide et d'une vanne d'isolation 15d.

La séquence de remplissage est alors :
- on ferme la vanne 15b, on ouvre la vanne 15d, et
- ou tire au vide la chambre 17, et
- on ferme la vanne 15d, on ouvre la vanne 15b,
- le matériau réticulable remplit alors intégralement la chambre 7, et
- on démonte la chambre à vide 15, et
- on bouche l'orifice avec le bouchon fileté 14b.

En procédant depuis l'intérieur, on aura préalablement percé dans le manchon tubulaire de jonction 3 un petit trou 14, par exemple de 3 mm de diamètre, et l'on vient de manière similaire installer la chambre à vide 15 munie de ses orifices et de ses vannes d'isolation, et l'on opère l'ensemble selon la séquence détaillée précédemment, et, à la dernière étape, on laisse le trou de remplissage ouvert et on se contente d'éliminer les traces de produit sur la face interne du manchon tubulaire de jonction. Le produit une fois réticulé jouera le rôle d'obturateur.

Sur les figures 11a à 11f, on a représenté des schémas illustrant des résultats de calculs en éléments finis des phases successives de l'enfilage du manchon tubulaire de jonction, et illustrant la plastification du matériau thermoplastique de la chemise, ainsi que la déformation élastique du manchon tubulaire de jonction. Ladite déformation du manchon est maximale en haut 3-5 de l'extrémité en biseau 3-1 de la figure 11f, zone correspondant également à la plastification maximale du matériau thermoplastique de la chemise et créant ainsi un anneau d'étanchéité. Les crans 3-2 multiples de la surface externe du manchon tubulaire de jonction plastifient, à un degré moindre, ladite chemise au niveau des sommets des crans 3-2, créant ainsi des anneaux d'étanchéité complémentaires. Ledit manchon tubulaire de jonction vient alors en butée sur la chemise. ledit manchon est inséré contre la partie terminale d'épaisseur réduite 2a, 2b du chemisage jusqu'à ce que l'extrémité 2-1 du chemisage vienne buter contre un épaulement 3-3 délimitant la dite partie centrale 3c du manchon et la dite partie terminale de plus faible épaisseur 3a, 3b du manchon.. La précontrainte ainsi obtenue du manchon tubulaire de jonction, associée à la plastification du matériau thermoplastique, crée alors un encastrement dudit manchon tubulaire de jonction dans la chemise et donc dans la conduite acier. L'axe XX du manchon tubulaire de jonction coïncide alors avec l'axe de la conduite acier, ce qui permet le guidage et facilite grandement l'insertion de la partie femelle 2-3 de l'élément de conduite ou pièce de raccordement à assembler dans la partie mâle 3-4 de l'extrémité de la pièce de raccordement ou respectivement élément de conduite terminal d'une conduite déjà assemblée, lors de l'installation dans la tour de pose en J telle qu'explicitée précédemment dans les figures 9a-9c.

Au cours du temps, le matériau thermoplastique sera amené à fluer et les cavités 3-6 entre les crans 3-2 seront progressivement, sur plusieurs années, voire plusieurs décennies, comblées par ledit matériau thermoplastique. De la même manière, le manchon tubulaire de jonction présentant en 3-5 une déformation initiale maximale, reprendra par simple élasticité sa forme cylindrique naturelle, jouant ainsi le rôle de ressort et compensant ledit fluage du matériau thermoplastique, continuant ainsi à assurer l'étanchéité de la chambre annulaire 17.

Sur la figure 12a, on a représenté la conduite chemisée soumise à la pression de service P = 50 MPa, alors que la chambre 17 reste sensiblement à la pression atmosphérique. Il en résulte alors une expansion radiale du manchon tubulaire de jonction qui reprend alors seul l'effort d'éclatement dans toute la zone de la chambre 17, la conduite acier n'étant dans ladite zone sensiblement pas sollicité par ledit effet d'éclatement. La figure 12b est un agrandissement de la zone crantée du manchon tubulaire de jonction relatif à la figure 12a et illustre la pénétration des sommets desdits crantages dans le matériau thermoplastique de la chemise, ainsi que le fluage dudit thermoplastique vers la chambre 17 créé par la pression P s'exerçant à l'intérieur de la conduite chemisée en service.

On a décrit les manchon 3 et demi manchon 4 comme étant constitués d'un matériau résistant à la corrosion, plus particulièrement comme étant un matériau métallique, plus particulièrement encore comme étant un alliage inconel, mais on reste dans l'esprit de l'invention en considérant un matériau composite, par exemple un composite carbone ou fibre de verre au sein d'une matrice de liaison par exemple du type époxy ou polyuréthanne. Divers procédés peuvent être envisagés pour sa fabrication, par exemple l'enroulement filamentaire sur mandrin, le surmoulage de fibres organisées par une résine fluide, ou tout autre procédé apte à réaliser des pièces de révolution à forte résistance mécanique. On sélectionnera les résines de manière à ce qu'elles puissent résister à la chaleur engendrée par le soudage des conduites entre elles, lors de l'assemblage des rames sur site, au sein de la tour de pose en J, et l'on intercalera avantageusement un écran thermique, par exemple en fibre de céramique, entre ledit manchon tubulaire et ladite conduite acier, au niveau de la jonction.

On a décrit les extrémités du manchon tubulaire de jonction 3 et demi manchon 4 comme présentant des crantages de révolution, mais on reste dans l'esprit de l'invention si le crantage est un filetage de forme hélicoïdale, et donc constitué d'une seule excroissance effectuant plusieurs tours à la périphérie dudit manchon tubulaire de jonction. Ainsi, la mise en place du manchon tubulaire de jonction sur le site de préfabrication pourra se faire soit par enfoncement à l'aide d'une presse comme explicité précédemment, soit par vissage jusqu'à ce que ledit manchon tubulaire de jonction vienne buter sur la tranche de la chemise. De la même manière, l'installation sur site au sein de la tour de pose en J, se fera soit par enfoncement direct, soit par vissage, la surface crantée de la seconde extrémité du manchon tubulaire de jonction prouvant être soit de révolution, soit de forme hélicoïdale.

## Revendications

1. Procédé de revêtement de la surface interne(1-1) d'une pièce de raccordement en acier (1a,1a-1,1a-2,1a-3) comprenant un volume interne (1-2) vide délimité par ladite surface interne, par un chemisage constitué d'une couche d'épaisseur sensiblement uniforme d'un matériau thermoplastique (2), ladite pièce de raccordement comprenant au moins 2 extrémités tubulaires ouvertes (1a') aptes au raccordement respectivement d'au moins 2 éléments de conduite en acier (1b) comprenant un même chemisage interne (2), **caractérisé en ce qu'**on réalise les étapes dans lesquelles :
a) on ferme lesdites extrémités ouvertes (1a') de ladite pièce de raccordement (1a) avec des couvercles (1-3) dont au moins un desdits couvercles présente un orifice de remplissage avec vanne d'isolation (1-4) apte à permettre l'introduction de granules (2-1) de dit matériau thermoplastique dans ledit volume interne (1-2), et de préférence un orifice de ventilation ou purge avec vanne d'isolation (1-5), et on bouche toutes les autres ouvertures éventuelles de ladite pièce, et
b) on introduit desdites granules de dit matériau thermoplastique dans ledit volume interne (1-2) à travers un dit orifice de remplissage (1-4), en quantité nécessaire et suffisante pour obtenir une couche de dit matériau thermoplastique (2) sur toute ladite surface interne d'une épaisseur désirée sensiblement uniforme, et
c) on chauffe les parois de ladite pièce de raccordement délimitant ledit volume interne à une température permettant la fusion desdites granules, et
d) on fait tourner simultanément ladite pièce de raccordement selon au moins 2 axes de rotation (8a,8b) différents, pendant un temps suffisant et à une vitesse suffisamment faible pour permettre la fusion dudit matériau thermoplastique sur ladite surface interne et sa répartition de manière sensiblement uniforme sur toute ladite surface interne, et
e) tout en maintenant ladite rotation, on refroidit ou laisse refroidir ladite pièce de raccordement avant d'enlever lesdits couvercles (1-3).

2. Procédé selon la revendication 1 **caractérisé en ce qu'**on maintient la pression interne contre lesdites parois revêtues de dit matériau à l'intérieur dudit volume interne pendant ledit refroidissement.

3. Procédé selon la revendication 1 ou 2 **caractérisé en ce qu'**on augmente la pression à l'intérieur dudit volume avant le refroidissement en pressurisant ledit volume interne. à l'aide d'un gaz ou de l'eau sous pression introduit(e) par ledit orifice de ventilation ou purge (1-5), et on maintient cette pression interne supérieure pendant le refroidissement, de préférence à une valeur d'au moins 10 ⁶ Pa.

4. Procédé selon l'une des revendications 1 à 3 **caractérisé en ce que,** à l'étape c), on chauffe lesdites parois en plaçant ladite pièce dans un four.

5. Procédé selon l'une des revendications 1 à 4 **caractérisé en ce que** à l'étape d), on fait tourner ladite pièce de raccordement à l'aide d'un dispositif de rotation multidirectionnel de roto moulage.

6. Procédé selon l'une des revendications 1 à 5 **caractérisé en ce qu'**on utilise des granules de polyéthylène, polypropylène, polyamide, et polyvinyle.

7. Procédé selon l'une des revendications 1 à 6 **caractérisé en ce que** la dite pièce de raccordement est un élément de conduite coudé (1a-1) apte à permettre le raccordement de 2 éléments de conduite (1b) s'étendant dans deux directions différentes (XX',YY') respectivement à chacune des extrémités (1a') dudit élément coudé constituant la dite pièce de raccordement

8. Procédé selon l'une des revendications 1 à 7 **caractérisé en ce que** ladite pièce de raccordement est un élément en forme de T (1a-2) apte à permettre le raccordement de 3 éléments de conduite (1b) à chacune des ses extrémités (1a') s'étendant dans deux directions faisant entre elles un angle compris entre 0 et 90°, ou de préférence 90°.

9. Procédé selon l'une des revendications 1 à 8 **caractérisé en ce que** ladite pièce de raccordement est un manchon tubulaire de rétrécissement (1a-3) présentant deux extrémités tubulaires (1a') dont les sections transversales circulaires sont de diamètres internes différents, aptes à permettre le raccordement de 2 éléments de conduite (1b) de diamètres correspondant respectivement aux diamètres internes des 2 extrémités tubulaires dudit manchon tubulaire de rétrécissement.

10. Procédé selon l'une des revendications 1à 9 **caractérisé en ce que** ladite surface interne est une surface non entièrement cylindrique.

11. Procédé selon l'une des revendications 1 à 10 **caractérisé en ce que** pendant l'étape de refroidissement, on pressurise ledit volume interne avec de l'eau à haute température, que l'on refroidit par circulation dans un échangeur de chaleur qui lui permet de perdre des calories tout en maintenant le niveau de pression souhaitée jusqu'à ce que l'ensemble de ladite pièce de raccordement et dudit matériau thermoplastique appliqué en couche soit complètement refroidit.

12. Procédé selon l'une des revendications 1 à 11 **caractérisé en ce qu'**on isole thermiquement les zones de la paroi de ladite pièce de raccordement de plus faible épaisseur.

13. Procédé selon l'une des revendications 1 à 12, **caractérisé en ce que :**
- on réalise un premier dit revêtement pour obtenir un dit chemisage d'une première couche d'un premier matériau thermoplastique, et
- on réalise un second revêtement d'une seconde couche d'un second matériau thermoplastique différent dudit premier matériau, ledit second matériau thermoplastique étant contenu dans un réservoir différent et introduit dans ladite pièce de raccordement par un dit couvercle lorsque ledit premier matériau est intégralement fondu et adhère aux dites parois, ledit second matériau recouvrant ledit premier matériau et étant fondu jusqu'à obtenir l'épaisseur finale recherche.

14. Procédé selon l'une des revendications 1 à 13 **caractérisé en ce que** ladite pièce de raccordement (1a) comprend à au moins une de ses extrémités tubulaires (1a') une première bride de liaison (6a) apte à coopérer avec une deuxième bride de liaison (6b) d'un dit élément de conduite (1b) à raccorder à ladite pièce de raccordement, et on réalise le revêtement en continuité de l'ensemble de la surface interne (1-1) de la pièce de raccordement et de ladite première bride de liaison avec une couche de dit matériau thermoplastique, après fixation par soudage (5-1) de ladite première bride (6a) à l'extrémité (1a') de ladite pièce de raccordement et fermeture de l'extrémité ouverte de ladite première bride (6a) avec un dit couvercle (1-3).

15. Procédé selon la revendication 14 **caractérisé en ce qu'**on met en oeuvre un dit couvercle (1-3) dont la forme et le moyen de fixation sur ladite bride permettent de réaliser le revêtement en continuité de l'ensemble de la surface interne de la pièce de raccordement et de ladite première bride de liaison, et de la face externe d'appui (6a') de ladite première bride contre ladite deuxième bride, avec une couche (2) de matériau thermoplastique.

16. Pièce de raccordement (1a) comprenant un volume interne (1-2) vide délimité par une surface interne enrobée d'un chemisage (2) d'épaisseur sensiblement uniforme obtenu par un procédé selon l'une des revendications 1 à 15.

17. Pièce de raccordement selon la revendication 16 **caractérisée en ce que** ladite surface interne est une surface non cylindrique.

18. Pièce de raccordement selon l'une des revendications 16 ou 17 obtenue par le procédé selon la revendication 13 ou 14 **caractérisée en ce qu'**elle comprend à au moins une de ses extrémités (1a') une dite première bride de liaison (6a) qui lui est soudée (5-1).

19. Pièce de raccordement selon l'une des revendications 16 à 18 **caractérisée en ce que** ledit chemisage interne en matériau thermoplastique (2), à au moins une de ses dites extrémités tubulaires ouvertes (1a'), comporte une partie terminale d'épaisseur réduite (2a) par rapport à l'épaisseur du reste (2c) dudit chemisage, obtenue par usinage, ladite partie terminale (2a) définissant ainsi une surface interne de révolution de diamètre interne plus grand que celui du reste dudit chemisage interne et se terminant à une certaine distance (d) de l'extrémité de ladite pièce de raccordement.

20. Procédé d'assemblage d'une conduite **caractérisé en ce que** l'on assemble une pièce de raccordement selon l'une des revendications 16 à 19 avec un élément de conduite (1b) comportant un chemisage interne (2).

21. Procédé d'assemblage selon la revendication 20, **caractérisé en ce que** :
- la dite pièce de raccordement comprend une dite première bride de liaison (6a) à laquelle elle est soudée (5-1), dont l'ensemble de la surface interne de la pièce de raccordement et de ladite première bride de liaison ainsi que la face externe d'appui (6a') de ladite première bride contre ladite deuxième bride sont revêtus d'une dite couche continue de matériau thermoplastique (2), et
- le dit élément de conduite (1b) comprend à son extrémité (1b') une dite deuxième bride de liaison (6b) à laquelle elle est soudée, dont l'ensemble de la surface interne dudit élément de conduite et de ladite deuxième bride de liaison ainsi que la face externe d'appui (6b') de ladite deuxième bride contre ladite première bride sont revêtus d'une dite couche continue de matériau thermoplastique, et
- on raccorde l'une à l'autre lesdites première et deuxième bride de liaison de préférence contre un joint intercalaire (6c).

22. Procédé d'assemblage selon la revendication 20 **caractérisé en ce que** l'on assemble une pièce de raccordement telle que définie dans la revendication 18 avec un dit élément de conduite (1b), à l'aide d'un manchon tubulaire de jonction (3) et **en ce que** l'on insert ledit manchon de jonction à l'intérieur de l'extrémité tubulaire ouverte (1a') de ladite pièce de raccordement par un coté dudit manchon, lequel manchon présente sensiblement le même diamètre interne que ledit chemisage interne (2,2c) de ladite pièce de raccordement.

23. Procédé selon la revendication 22 **caractérisé en ce que** l'on insert ledit manchon de jonction :
- par un coté dudit manchon, à l'intérieur de l'extrémité tubulaire ouverte (1a') de la dite pièce de raccordement, celle-ci étant dépourvue de bride de liaison, et
- par l'autre coté dudit manchon, à l'intérieur de l'extrémité correspondante (1b') dudit élément de conduite, celle-ci étant dépourvue de dite bride de liaison, et
- on rapproche et soude (5) entre elles les extrémités (1a', 1b') de ladite pièce de raccordement et dudit élément de conduite par-dessus ledit manchon de jonction (3).

24. Procédé selon la revendication 23 **caractérisé en ce que** on réalise les étapes dans lesquelles:
a) on met en oeuvre desdites pièces de raccordement, dit élément de conduite et dit manchon tubulaire de jonction tels que :
- les chemisages internes en matériau thermoplastique des extrémités ouvertes (1a',1b') de ladite pièce de raccordement et dudit élément de conduite comportent chacune une partie terminale d'épaisseur réduite (2a,2b) par rapport à l'épaisseur du reste (2c) dudit chemisage, et
- ledit manchon présente à chacune de ses extrémités une partie terminale (3a,3b) d'épaisseur réduite par rapport à l'épaisseur de la partie centrale (3c) dudit manchon, ladite partie terminale (3a,3b) du manchon définissant une surface externe de révolution de diamètre externe inférieur au diamètre interne des extrémités terminales non chemisées de ladite pièce de raccordement et dudit élément de conduite, ledit manchon (3) présentant sensiblement le même diamètre interne que ledit chemisage interne des parties courantes des pièces de raccordement et dudit élément de conduite, et
b) on insert le dit manchon tubulaire de jonction à l'intérieur des dites extrémités tubulaires ouverte de chemisage d'épaisseur réduite (2a,2b) de ladite pièce de raccordement et du dit élément de conduite, de manière à chevaucher lesdites parties terminales d'épaisseur réduite de chemisage (2a,2b).

25. Procédé d'assemblage selon la revendication 20, **caractérisé en ce que** l'on assemble une pièce de raccordement (1a) telle que définie revendication 19 et que l'on réalise les étapes dans lesquelles:
a) on met initialement en oeuvre
- une dite pièce de raccordement (1a) comprenant une dite première bride de liaison (6a) à laquelle elle est soudée (5-1), dont l'ensemble de la surface interne de la pièce de raccordement et de ladite première bride de liaison est revêtu d'une dite couche de matériau thermoplastique, et
- un dit élément de conduite (1b) comprenant à son extrémité une dite deuxième bride de liaison (6b) à laquelle elle est soudée (5-1), dont l'ensemble de la surface interne dudit élément de conduite et de ladite deuxième bride de liaison est revêtu d'une dite couche de matériau thermoplastique, et
b) on réalise l'usinage des chemisages internes (2) en matériau thermoplastique des extrémités de ladite pièce de raccordement comprenant une dite première bride et dudit élément de conduite comprenant une dite deuxième bride de manière à créer dans chacun desdits chemisages internes une partie terminale d'épaisseur réduite (2a,2b) par rapport à l'épaisseur du reste (2c) dudit chemisage, et se terminant à une certaine distance (d) respectivement desdites extrémités de ladite pièce de raccordement et dudit élément de conduite de sorte que les surfaces internes (1-1a,1-1b) desdites première et deuxième brides ne sont pas chemisées, et
c) on insère à chacune des extrémités ouvertes desdites première et deuxième brides, des demi manchons tubulaires de jonction (4) destinés à renforcer les jonctions entre ladite pièce de raccordement et ladite première bride et respectivement entre ledit élément de conduite et ladite deuxième bride,
- chaque dit demi manchon (4) présentant :
- à son extrémité avant une partie terminale avant de paroi tubulaire (4a) d'épaisseur réduite par rapport à la partie centrale (4c) de la paroi tubulaire desdits demi- manchons, et
- à son extrémité arrière une parie terminale arrière de paroi tubulaire (4b) de plus grande épaisseur que la partie centrale (4c) desdits demi manchons,
- chaque demi manchon étant inséré de manière à ce que lesdites parties terminales avant (4a) de paroi d'épaisseur réduite desdits demi manchons (4) se chevauchent avec lesdites parties terminales d'épaisseur réduite (2a,2b) desdits chemisages de ladite pièce de raccordement et respectivement dudit élément de conduite, et
d) on soude (5-2) lesdits demi manchons avec lesdites première et respectivement deuxième bride au niveau desdites extrémités arrière desdits demi manchons et faces externes d'appui (6a',6b') desdites première et respectivement deuxième brides, et
e) on rapproche et fixe l'une à l'autre lesdites première et deuxième brides de liaison.

26. Procédé selon l'une des revendications 22 à 25 **caractérisé en ce que** :
- lesdits manchons tubulaires de jonction (3), et le cas échéant dits demi manchons tubulaires de jonction (4) sont en matériau résistant à la corrosion, de préférence du type acier inox ou alliage inconel., et
- le diamètre externe de la partie centrale (3c,4c) cylindrique dudit manchon ou le cas échéant desdits demi manchons est inférieur au diamètre interne des extrémités non chemisées (1-1a,1-1b) des parois en acier respectivement de ladite pièce de raccordement, dudit élément de conduite ou le cas échéant desdites première et deuxième brides.

27. Procédé selon les revendications 25 et 26 **caractérisé en ce que** les extrémités arrière non chemisées (1-1a,1-1b) des surfaces internes desdites première et respectivement deuxième brides en contact avec lesdites parties terminales arrière (4b) desdits demi manchons, et lesdites faces externes d'appui (6a',6b') dans la zone de soudage (6d) desdites première et deuxième brides avec la partie terminale arrière (4b) desdits demi manchons, sont revêtues localement d'un même métal anti-corrosion (6d) que celui constitutif desdits demi manchons.

28. Procédé selon l'une des revendications 22 à 27 **caractérisé en ce que** les surfaces externes desdites parties terminales d'épaisseur réduite (3a,3b) desdits manchons ou le cas échéant demi manchons sont des surfaces crantées (3-2), de préférence avec une extrémité sensiblement effilée en biseau (3-1) permettant son insertion et ancrage contre les surfaces internes des parties terminales d'épaisseur réduite (2a,2b) des chemisages correspondants, réalisant ainsi une liaison mécanique entre lesdites surfaces externes desdits manchons ou demi manchons et surface interne desdits chemisages d'épaisseur réduite, par simple encastrement en force desdits manchons ou le cas échéant demi manchons dans la direction longitudinale axiale à l'intérieur desdites extrémités ouvertes respectivement de ladite pièce de raccordement, dudit élément de conduite ou le cas échéant desdites première et respectivement deuxième brides.

## Claims

1. A method of covering the inner surface (1-1) of a steel connecting part (1a, 1a-1, 1a-2, 1a-3) having an empty internal volume (1-2) defined by said inner surface, with a liner consisting of a layer with substantially uniform thickness of a thermoplastic material (2), said connecting part comprising at least two open tubular ends (1a') suitable for respectively connecting to at least two steel duct elements (1b) comprising a same internal liner (2), **characterized in that** steps are performed wherein:
a) said open ends (1a') of said connecting part (1a) are closed with covers (1-3), at least one of said covers having a filling orifice with an isolation valve (1-4) suitable for allowing granules (2-1) of so-called thermoplastic material to be introduced into said internal volume (1-2), and preferably a ventilation or purge orifice with an isolation valve (1-5) is closed, and all other possible openings in said part are plugged; and
b) said granules of said thermoplastic material are introduced into said internal volume (1-2) through a so-called filler orifice (1-4), in an amount which is necessary and sufficient for obtaining a layer of said thermoplastic material (2) over the whole of said inner surface with a substantially uniform desired thickness; and
c) the walls of said connecting part defining said internal volume are heated to a temperature allowing said granules to be melted; and
d) said connecting part is caused to turn simultaneously about at least two different axes of rotation (8a, 8b) for a sufficient period of time and at a sufficiently low speed to allow said thermoplastic material to melt on said inner surface and to be distributed in a substantially uniform way over the whole of said inner surface; and
e) while maintaining said rotation, said connecting part is cooled or left to cool prior to removing said covers (1-3).

2. The method according to claim 1, **characterized in that** the internal pressure is maintained against said walls covered with said material inside said internal volume during said cooling.

3. The method according to claim 1 or 2, **characterized in that the pressure inside said volume is increased before cooling b**y pressurizing said internal volume with gas or water under pressure which is introduced through said ventilation or purge orifice (1-5), and this higher internal pressure is maintained during cooling, preferably at a value of at least 10⁶ Pa.

4. The method according to any of claims 1 to 3, **characterized in that,** in step c), said walls are heated by placing said part in an oven.

5. The method according to any of claims 1 to 4, **characterized in that,** in step d), said connecting part is caused to rotate by means of a multidirectional rotation device for rotational molding.

6. The method according to any of claims 1 to 5, **characterized in that** polyethylene, polypropylene, polyamide, and polyvinyl granules are used.

7. The method according to any of claims 1 to 6, **characterized in that** said connecting part is a bend duct element (1a-1) suitable for allowing two duct elements (1b) extending in two different directions (XX', YY') to be connected together by respectively connecting them to each of ends (1a') of said bend element forming said connecting part.

8. The method according to any of claims 1 to 7, **characterized in that** said connecting part is a T-shaped element (1a-2) suitable for allowing three duct elements (1b) to be connected to each of its ends (1a'), extending in two directions forming between them an angle comprised between 0 and 90°, or preferably of 90°.

9. The method according to any of claims 1 to 8, **characterized in that** said connecting part is a tapering tubular sleeve (1a-3) having two tubular ends (1a'), the circular cross-sections of which are of different inner diameters, suitable for allowing two duct elements (1b) with diameters respectively corresponding to the inner diameters of the two tubular ends of said tapering tubular sleeve to be connected thereto.

10. The method according to any of claims 1 to 9, **characterized in that** said inner surface is a not entirely cylindrical surface.

11. The method according to any of claims 1 to 10, **characterized in that** during the cooling step, said internal volume is pressurized with water at high temperature which is cooled by being caused to flow through a heat exchanger allowing it to lose heat while maintaining the desired pressure level until the whole of said connecting part and said thermoplastic material applied as a layer thereon is completely cooled.

12. The method according to any of claims 1 to 11, **characterized in that** the areas of the wall of said connecting part with smaller thickness are thermally insulated.

13. The method according to any of claims 1 to 12, **characterized in that:**
· a first said covering is made to obtain a so-called liner comprising a first layer of a first thermoplastic material; and
· a second covering is made to obtain a second layer of a second thermoplastic material different from said first material, said second thermoplastic material being contained in a different reservoir and introduced into said connecting part through a so-called cover when said first material has melted completely and adheres to said walls, said second material covering said first material and being melted until the desired final thickness is obtained.

14. The method according to any of claims 1 to 13, **characterized in that** said connecting part (1a) comprises, at at least one of its tubular ends (1a'), a first connecting flange (6a) suitable for co-operating with a second connecting flange (6b) of a so-called duct element (1b) to be connected to said connecting part, and the covering is made continuously over the entire inner surface (1-1) of the connecting part and over said connecting flange with a layer of said thermoplastic material, after said first flange (6a) has been attached by welding (5-1) to the end (1a') of said connecting part and the open end of said first flange (6a) has been closed with a so-called cover (1-3).

15. The method according to claim 14, **characterized in that** a so-called cover (1-3) is applied with a shape and means for attaching it to said flange whereby the entire inner surface of the connecting part and of said first connecting flange and the external face (6a') of said first flange bearing against said second flange may be continuously covered with a layer (2) of thermoplastic material.

16. A connecting part (1a) including an empty internal volume (1-2) delimited by an inner surface coated with a liner (2) of substantially uniform thickness obtained by a method according to any of claims 1 to 15.

17. The connecting part according to claim 16, **characterized in that** said inner surface is a non-cylindrical surface.

18. The connecting part according to any of claims 16 or 17 obtained by the method according to claim 13 or 14, **characterized in that** it comprises at at least one of its ends (1a') a so-called first connecting flange (6a) which is welded thereto (5-1).

19. The connecting part according to any of claims 16 to 18, **characterized in that** said internal liner (2) of thermoplastic material, at at least one of its said open tubular ends (1a') includes an end portion (2a) with reduced thickness relative to the thickness of the remainder (2c) of said liner, obtained by machining, said end portion (2a) thereby defining an inner surface of revolution with a greater inner diameter than the inner diameter of the remainder of said internal liner and terminating at a certain distance (d) from the end of said connecting part.

20. A method of assembling a duct, **characterized in that** a connecting part according to any of claims 16 to 19 is assembled with a duct element (1b) including an internal liner (2).

21. The assembly method according to claim 20, **characterized in that:**
- said connecting part includes a so-called first connecting flange (6a) to which it is welded (5-1), with the entire inner surface of the connecting part and of said first connecting flange, and also the external face (6a') of said first flange bearing against said second flange being covered with a so-called continuous layer (2) of thermoplastic material; and
- said duct element (1b) includes at its end (1b') a so-called second connecting flange (6b) to which it is welded, with the entire inner surface of said duct element and of said second connecting flange, and also the external face (6b') of said second flange bearing against said first flange being covered with a so-called continuous layer of thermoplastic material; and
- said first and second connecting flanges are connected together, preferably against an interposed gasket (6c).

22. The assembly method according to claim 20, **characterized in that** a connecting part as defined in claim 18 is assembled with a so-called duct element (1b) by means of a tubular junction sleeve (3), and **in that** said junction sleeve is inserted inside the open tubular end (1a') of said connecting part through one side of said sleeve, which sleeve substantially has the same inner diameter as said internal liner (2, 2c) of said connecting part.

23. The method according to claim 22, **characterized in that** said junction sleeve is inserted:
- through one side of said sleeve into the inside of the open tubular end (1a') of said connecting part, the latter being without a connecting flange; and
- through the other side of said sleeve into the inside of the corresponding end (1b') of said duct element, the latter being without said connecting flange; and
- the ends (1a', 1b') of said connecting part and of said duct element are moved closer to each other and welded (5) together over said junction sleeve (3).

24. The method according to claim 23, **characterized in that** steps are performed wherein:
a) said connecting part, said duct element, and said tubular junction sleeve are applied so that:
- each of the internal liners of thermoplastic material of the open ends (1a', 1b') of said connecting part and of said duct element includes an end portion (2a, 2b) with reduced thickness relative to the thickness of the remainder (2c) of said liner; and
- said sleeve has at each of its ends an end portion (3a, 3b) with reduced thickness relative to the thickness of the central portion (3c) of said sleeve, said end portion (3a, 3b) of the sleeve defining an outer surface of revolution with a smaller outer diameter than the inner diameter of the non-lined ends of said connecting part and of said duct, said sleeve (3) substantially having the same inner diameter as said internal liner of the standard portions of the connecting parts and of said duct element; and
b) said tubular junction sleeve is inserted into the inside of said open tubular ends (2a, 2b) with reduced thickness of the liner of said connecting part and of said duct element so as to overlap said reduced-thickness end portions (3a, 3b) of liner.

25. The assembly method according to claim 20, **characterized in that** a connecting part (1a) as defined in claim 19 is assembled and the steps are performed wherein:
a) initially the following are applied:
- a so-called connecting part (1a) comprising a so-called first connecting flange (6a) to which it is welded (5-1), with the entire inner surface of the connecting part and of said first connecting flange being covered with a so-called layer of thermoplastic material; and
- a so-called duct element (1b) comprising at its end a so-called second connecting flange (6b) to which it is welded (5-1), with the entire inner surface of said duct element and of said second connecting flange being covered with a so-called layer of thermoplastic material; and
b) machining of the internal liners (2) of thermoplastic material at the ends of said connecting part comprising a so-called first flange and of said duct element comprising a so-called second flange is performed so as to create in each of said internal liners an end portion (2a, 2b) with reduced thickness relative to the thickness of the remainder (2c) of said liner, and terminating at a certain distance (d) from said ends of said connecting part and of said duct element respectively so that the inner surfaces (1-1a, 1-1b) of said first and second flanges are not lined; and
c) at each of the open ends of said first and second flanges, tubular junction half-sleeves (4) are inserted for reinforcing the junctions between said connecting part and said first flange and between said duct element and said second flange, respectively,
- each said half-sleeve (4) having:
- at its front end, a front end portion of tubular wall (4a) with reduced thickness relative to the central portion (4c) of the tubular wall of said half-sleeves; and
- at its rear end, a rear end portion of tubular wall (4b) with greater thickness than the thickness of the central portion (4c) of said half-sleeve; and
- each half-sleeve being inserted so that said front end portions (4a) with reduced wall thickness of said half-sleeves (4) overlap said end portions (2a, 2b) with reduced thickness of said liners of said connecting part and of said duct element, respectively, and
d) said half-sleeves are welded (5-2) to said first and second flanges respectively at said rear ends of said half-sleeves and external bearing faces (6a', 6b') of said first and second flanges, respectively; and
e) said first and second connecting flanges are moved closer to each other and attached to each other.

26. The method according to any of claims 22 to 25, **characterized in that:**
- said tubular junction sleeves (3), and where appropriate said tubular junction half-sleeves (4) are in a corrosion-resistant material, preferably of the stainless steel or Inconel alloy type; and
- the outer diameter of the cylindrical central portion (3c, 4c) of said sleeve or where appropriate of said half-sleeve is smaller than the inner diameter of the non-lined ends (1-1a, 1-1b) of the steel walls of said connecting part, of said duct element, respectively, or where appropriate, of said first and second flanges.

27. The method according to claims 25 and 26, **characterized in that** the non-lined rear ends (1-1a, 1-1b) of the inner surfaces of said first and second flanges respectively in contact with said rear end portions (4b) of said half-sleeves, and said external bearing faces (6a', 6b') in the area (6d) for welding said first and second flanges to said rear end portions (4b) of said half-sleeves, are locally covered with the same anti-corrosion metal (6d) as the metal forming said half-sleeves.

28. The method according to any of claims 22 to 27, **characterized in that** the outer surfaces of said end portions (3a, 3b) with reduced thickness of said sleeves, or where appropriate of said half-sleeves, are notched surfaces (3-2), preferably having a substantially tapering chamfered end (3-1) allowing insertion and anchoring against the inner surfaces of the end portions (2a, 2b) with reduced thickness of the corresponding liners, thus providing a mechanical connection between said outer surfaces of said sleeves or half-sleeves and the inner surfaces of said liners with reduced thickness, by simple force-fitting of said sleeves, or where appropriate said half-sleeves, in the axial longitudinal direction into said open ends of said connecting part, of said duct element, respectively, or where appropriate of said first and second flanges, respectively.

## Patentansprüche

1. Verfahren zur Auskleidung der Innenseite (1-1) eines Stahlanschlußteils (1a, 1a-1, 1a-2, 1a-3), das einen leeren, durch die Innenseite begrenzten Innenraum (1-2) aufweist, mit einem Mantel, der von einer Schicht mit im wesentlichen gleichmäßiger Dicke aus einem thermoplastischen Material (2) gebildet ist, wobei das Anschlußteil wenigstens zwei offene röhrenförmige Enden (1a') aufweist, die jeweils für den Anschluß von wenigstens zwei einen gleichen Innenmantel (2) aufweisenden Stahlrohrleitungselementen (1 b) geeignet sind, **dadurch gekennzeichnet, daß** die Schritte durchgeführt werden, bei denen:
a) die offenen Enden (1a') des Anschlußteils (1a) mit Deckeln (1-3) verschlossen werden, von denen wenigstens ein Deckel eine Einfüllöffnung mit Absperrventil (1-4), die geeignet ist, das Einführen von Körnchen (2-1) aus thermoplastischem Material in den Innenraum (1-2) zu ermöglichen, sowie vorzugsweise eine Lüftungs- oder Entleerungsöffnung mit Absperrventil (1-5) aufweist, und alle anderen eventuellen Öffnungen des Teils verschlossen werden, und
b) Körnchen aus thermoplastischem Material über eine Einfüllöffnung (1-4) in erforderlicher und ausreichender Menge in den Innenraum (1-2) eingebracht werden, um über die gesamte Innenseite eine Schicht aus thermoplastischem Material (2) mit einer gewünschten, im wesentlichen gleichmäßigen Dicke zu erhalten, und
c) die den Innenraum begrenzenden Wände des Anschlußteils auf eine Temperatur erhitzt werden, die das Schmelzen der Körnchen ermöglicht, und
d) man das Anschlußteil gleichzeitig um wenigstens zwei unterschiedliche Rotationsachsen (8a, 8b) drehen läßt, und dies über eine ausreichende Zeit und bei einer Geschwindigkeit, die gering genug ist, um das Schmelzen des thermoplastischen Materials auf der Innenseite sowie dessen Verteilung im wesentlichen gleichmäßig über die gesamte Innenseite zu ermöglichen, und
e) man unter Aufrechterhaltung der Rotation das Anschlußteil kühlt oder abkühlen läßt, bevor die Deckel (1-3) abgenommen werden.

2. Verfahren nach Anspruch 1, **dadurch gekennzeichnet, daß** der Innendruck an den materialbeschichteten Wänden innerhalb des Innenraums während des Abkühlens aufrechterhalten wird.

3. Verfahren nach Anspruch 1 oder 2, **dadurch gekennzeichnet, daß** der Druck innerhalb des Raumes vor dem Abkühlen dadurch erhöht wird, daß der Innenraum mit Hilfe eines über die Lüftungs- oder Entleerungsöffnung (1-5) eingeführten Druckgases oder Druckwassers mit Druck beaufschlagt wird, und dieser höhere Innendruck während des Abkühlens aufrechterhalten wird, vorzugsweise auf einem Wert von wenigstens 10⁶ Pa.

4. Verfahren nach einem der Ansprüche 1 bis 3, **dadurch gekennzeichnet, daß** bei Schritt c) die Wände dadurch erhitzt werden, daß das Teil in einen Ofen eingebracht wird.

5. Verfahren nach einem der Ansprüche 1 bis 4, **dadurch gekennzeichnet, daß** bei Schritt d) das Anschlußteil mit Hilfe einer multidirektionalen Drehvorrichtung zum Rotationsformen gedreht wird.

6. Verfahren nach einem der Ansprüche 1 bis 5, **dadurch gekennzeichnet, daß** Körnchen aus Polyethylen, Polypropylen, Polyamid und Polyvinyl verwendet werden.

7. Verfahren nach einem der Ansprüche 1 bis 6, **dadurch gekennzeichnet, daß** das Anschlußteil ein gekrümmtes Rohrleitungselement (1a-1) ist, welches geeignet ist, den Anschluß von zwei sich in zwei unterschiedlichen Richtungen (XX', YY') erstreckenden Rohrleitungselementen (1b) an einem jeden der Enden (1a') des das Anschlußteil bildenden gekrümmten Elements zu ermöglichen.

8. Verfahren nach einem der Ansprüche 1 bis 7, **dadurch gekennzeichnet, daß** das Anschlußteil ein T-förmiges Element (1a-2) ist, welches geeignet ist, den Anschluß von drei Rohrleitungselementen (1 b) an jedem seiner sich in zwei Richtungen erstreckenden Enden (1a'), die in einem Winkel zwischen 0 und 90°, oder vorzugsweise 90° zueinander stehen, zu ermöglichen.

9. Verfahren nach einem der Ansprüche 1 bis 8, **dadurch gekennzeichnet, daß** das Anschlußteil eine röhrenförmige Verjüngungsmuffe (1a-3) ist, die zwei röhrenförmige Enden (1a') aufweist, deren kreisförmige Querschnitte unterschiedliche Innendurchmesser aufweisen und die geeignet sind, den Anschluß von zwei Rohrleitungselementen (1 b) zu ermöglichen, deren Durchmesser jeweils den Innendurchmessern der beiden röhrenförmigen Enden der röhrenförmigen Verjüngungsmuffe entsprechen.

10. Verfahren nach einem der Ansprüche 1 bis 9, **dadurch gekennzeichnet, daß** die Innenseite eine nicht vollkommen zylindrische Fläche ist.

11. Verfahren nach einem der Ansprüche 1 bis 10, **dadurch gekennzeichnet, daß** während des Abkühlschrittes der Innenraum mit heißem Wasser unter Druck gesetzt wird, das mittels Zirkulation in einem Wärmetauscher abgekühlt wird, der ihm ermöglicht, an Wärme zu verlieren und gleichzeitig das gewünschte Druckniveau solange aufrechtzuerhalten, bis das gesamte Anschlußteil und das gesamte als Schicht aufgetragene thermoplastische Material vollständig abgekühlt ist.

12. Verfahren nach einem der Ansprüche 1 bis 11, **dadurch gekennzeichnet, daß** die Bereiche der Wand des Anschlußteils mit geringerer Dicke wärmeisoliert werden.

13. Verfahren nach einem der Ansprüche 1 bis 12, **dadurch gekennzeichnet, daß:**
- eine erste Beschichtung durchgeführt wird, um einen Mantel aus einer ersten Schicht aus einem ersten thermoplastischen Material zu erhalten, und
- eine zweite Beschichtung aus einer zweiten Schicht aus einem zweiten thermoplastischen Material, das sich von dem ersten Material unterscheidet, hergestellt wird, wobei das zweite thermoplastische Material in einem anderen Behälter enthalten ist und über einen Deckel in das Anschlußteil eingebracht wird, wenn das erste Material vollständig geschmolzen ist und an den Wänden haftet, wobei das zweite Material das erste Material bedeckt und geschmolzen wird, bis die gewünschte Enddicke erreicht ist.

14. Verfahren nach einem der Ansprüche 1 bis 13, **dadurch gekennzeichnet, daß** das Anschlußteil (1a) an wenigstens einem seiner röhrenförmigen Enden (1a') einen ersten Verbindungsflansch (6a) aufweist, der geeignet ist, mit einem zweiten Verbindungsflansch (6b) eines an das Anschlußteil anzuschließenden Rohrleitungselements (1 b) zusammenzuwirken, und die gesamte Innenseite (1-1) des Anschlußteils sowie des ersten Verbindungsflansches, nach dem Festschweißen (5-1) des ersten Flansches (6a) an dem Ende (1a') des Anschlußteils und dem Verschließen des offenen Endes des ersten Flansches (6a) mit einem Deckel (1-3), durchgehend mit einer Schicht aus thermoplastischem Material überzogen wird.

15. Verfahren nach Anspruch 14, **dadurch gekennzeichnet, daß** ein Deckel (1-3) verwendet wird, dessen Form und Mittel zur Befestigung an dem Flansch ermöglichen, die gesamte Innenseite des Anschlußteils und des ersten Verbindungsflansches sowie die Außenseite (6a') des ersten Flansches zur Anlage an dem zweiten Flansch, durchgehend mit einer Schicht (2) aus thermoplastischem Material zu überziehen.

16. Anschlußteil (1a), das einen leeren Innenraum (1-2) umfaßt, der durch eine Innenseite begrenzt ist, welche von einem Mantel (2) mit im wesentlichen gleichmäßiger Dicke umhüllt ist, der mittels eines Verfahrens nach einem der Ansprüche 1 bis 15 erhalten wird.

17. Anschlußteil nach Anspruch 16, **dadurch gekennzeichnet, daß** die Innenseite eine nicht zylindrische Fläche ist.

18. Anschlußteil nach einem der Ansprüche 16 oder 17, das mittels des Verfahrens nach Anspruch 13 oder 14 erhalten wird, **dadurch gekennzeichnet, daß** es an wenigstens einem seiner Enden (1a') einen ersten Verbindungsflansch (6a) aufweist, der an ihm festgeschweißt ist (5-1).

19. Anschlußteil nach einem der Ansprüche 16 bis 18, **dadurch gekennzeichnet, daß** der Innenmantel aus thermoplastischem Material (2) an wenigstens einem seiner röhrenförmigen, offenen Enden (1a') einen durch Bearbeiten erhaltenen Endteil (2a) mit im Vergleich zur Dicke des restlichen Mantels (2c) reduzierter Dicke umfaßt, wodurch der Endteil (2a) einen Rotationsinnenfläche mit größerem Innendurchmesser als der restliche Innenmantel definiert und in einem gewissen Abstand (d) von dem Ende des Anschlußteils endet.

20. Verfahren zum Verbinden einer Rohrleitung, **dadurch gekennzeichnet, daß** ein Anschlußteil nach einem der Ansprüche 16 bis 19 mit einem einen Innenmantel (2) aufweisenden Rohrleitungselement (1 b) verbunden wird.

21. Verbindungsverfahren nach Anspruch 20, **dadurch gekennzeichnet, daß:**
- das Anschlußteil einen ersten Verbindungsflansch (6a) umfaßt, an den es angeschweißt ist (5-1), wobei die gesamte Innenseite des Anschlußteils und des ersten Verbindungsflansches sowie die Außenseite (6a') des ersten Flansches zur Anlage an dem zweiten Flansch mit einer durchgehenden Schicht aus thermoplastischem Material (2) überzogen werden, und
- das Rohrleitungselement (1 b) an seinem Ende (1b') einen zweiten Verbindungsflansch (6b) aufweist, an den es angeschweißt ist, wobei die gesamte Innenseite des Rohrleitungselements und des zweiten Verbindungsflansches sowie die Außenseite (6b') des zweiten Flansches zur Anlage an dem ersten Flansch mit einer durchgehenden Schicht aus thermoplastischem Material überzogen werden, und
- der erste und der zweite Verbindungsflansch miteinander verbunden werden, vorzugsweise an einer Zwischendichtung (6c).

22. Verbindungsverfahren nach Anspruch 20, **dadurch gekennzeichnet, daß** ein Anschlußteil, wie es in Anspruch 18 definiert ist, mit Hilfe einer röhrenförmigen Verbindungsmuffe (3) mit einem Rohrleitungselement (1 b) verbunden wird, und daß die Verbindungsmuffe in das röhrenförmige offene Ende (1a') des Anschlußteils mit einer Seite der Muffe eingesetzt wird, welche Muffe im wesentlichen den gleichen Innendurchmesser wie der Innenmantel (2, 2c) des Anschlußteils aufweist.

23. Verfahren nach Anspruch 22, **dadurch gekennzeichnet, daß** die Verbindungsmuffe folgendermaßen eingesetzt wird:
- mit einer Seite der Muffe in das röhrenförmige offene Ende (1a') des Anschlußteils, wobei dieses nicht mit einem Verbindungsflansch versehen ist, und
- mit der anderen Seite der Muffe in das entsprechende Ende (1b') des Rohrleitungselements, wobei dieses nicht mit einem Verbindungsflansch versehen ist, und
- die Enden (1a', 1b') des Anschlußteils und des Rohrleitungselements über der Verbindungsmuffe (3) aneinander genährt und miteinander verschweißt werden.

24. Verfahren nach Anspruch 23, **dadurch gekennzeichnet, daß** die Schritte durchgeführt werden, bei denen:
a) Anschlußteile, ein Rohrleitungselement und eine röhrenförmige Verbindungsmuffe verwendet werden, die derart sind, daß:
- die Innenauskleidungen aus thermoplastischem Material der offenen Enden (1a', 1b') des Anschlußteils und des Rohrleitungselements jeweils einen Endteil (2a, 2b) mit im Vergleich zur Dicke des restlichen Mantels (2c) reduzierter Dicke aufweisen, und
- die Muffe an jedem ihrer Enden einen Endteil (3a, 3b) mit im Vergleich zur Dicke des Mittelteils (3c) der Muffe reduzierter Dicke aufweist, wobei der Endteil (3a, 3b) der Muffe eine Rotationsaußenfläche definiert, deren Außendurchmesser kleiner ist als der Innendurchmesser der nicht ummantelten abschließenden Enden des Anschlußteils und des Rohrleitungselements, wobei die Muffe (3) im wesentlichen den gleichen Innendurchmesser wie der Innenmantel der durchgehenden Teile der Anschlußteile und des Rohrleitungselements aufweist, und
b) die röhrenförmige Verbindungsmuffe in die röhrenförmigen offenen Mantelenden reduzierter Dicke (2a, 2b) des Anschlußteils und des Rohrleitungselements derart eingesetzt wird, daß sie die Mantelendteile reduzierter Dicke (2a, 2b) überlappt.

25. Verbindungsverfahren nach Anspruch 20, **dadurch gekennzeichnet, daß** ein Anschlußteil (1a), wie es in Anspruch 19 definiert ist, verbunden wird und daß die Schritte durchgeführt werden, bei denen:
a) anfangs folgendes verwendet wird:
- ein Anschlußteil (1a) mit einem ersten Verbindungsflansch (6a), an den es angeschweißt ist (5-1), wobei die gesamte Innenseite des Anschlußteils und des ersten Verbindungsflansches mit einer Schicht aus thermoplastischem Material überzogen ist, und
- ein Rohrleitungselement (1 b), das an seinem Ende einen zweiten Verbindungsflansch (6b) aufweist, an den es angeschweißt ist (5-1), wobei die gesamte Innenseite des Rohrleitungselements und des zweiten Verbindungsflansches mit einer Schicht aus thermoplastischem Material überzogen ist, und
b) die Innenauskleidungen (2) aus thermoplastischem Material der Enden des Anschlußteils mit einem ersten Flansch und des Rohrleitungselements mit einem zweiten Flansch derart bearbeitet werden, daß in jeder der Innenauskleidungen ein Endteil (2a, 2b) mit im Vergleich zur Dicke des restlichen Mantels (2c) reduzierter Dicke erzeugt wird, der in einem gewissen Abstand (d) von den Enden des Anschlußteils bzw. des Rohrleitungselements endet, so daß die Innenseiten (1-1a, 1-1 b) des ersten und des zweiten Flansches nicht ummantelt sind, und
c) an jedem der offenen Enden des ersten und des zweiten Flansches röhrenförmige Verbindungshalbmuffen (4) eingesetzt werden, die dazu bestimmt sind, die Verbindungen zwischen dem Anschlußteil und dem ersten Flansch bzw. zwischen dem Rohrleitungselement und dem zweiten Flansch zu verstärken,
- wobei jede Halbmuffe (4) folgendes aufweist:
- an ihrem vorderen Ende einen vorderen Endteil mit röhrenförmiger Wand (4a), dessen Dicke gegenüber dem Mittelteil (4c) der röhrenförmigen Wand der Halbmuffen reduziert ist, und
- an ihrem hinteren Ende einen hinteren Endteil mit röhrenförmiger Wand (4b), dessen Dicke größer als die des Mittelteils (4c) der Halbmuffen ist,
- wobei jede Halbmuffe derart eingesetzt wird, da sich die vorderen Endteile (4a) mit einer Wand reduzierter Dicke der Halbmuffen (4) mit den Endteilen reduzierter Dicke (2a, 2b) der Auskleidungen des Anschlußteils bzw. des Rohrleitungselements überlappen, und
d) die Halbmuffen mit dem ersten bzw. dem zweiten Flansch im Bereich der hinteren Enden der Halbmuffen sowie der äußeren Anlageflächen (6a', 6b') des ersten bzw. des zweiten Flansches verschweißt werden (5-2), und
e) der erste und der zweite Verbindungsflansch einander genähert und aneinender befestigt werden.

26. Verfahren nach einem der Ansprüche 22 bis 25, **dadurch gekennzeichnet, daß:**
- die röhrenförmigen Verbindungsmuffen (3) und gegebenenfalls röhrenförmigen Verbindungshalbmuffen (4) aus einem korrosionsbeständigen Material, vorzugsweise vom Typ rostfreier Stahl oder Inconel-Legierung bestehen, und
- der Außendurchmesser des zylindrischen Mittelteils (3c, 4c) der Muffe oder gegebenenfalls Halbmuffen kleiner ist als der Innendurchmesser der nicht ummantelten Enden (1-1a, 1-1b) der Stahlwände des Anschlußteils, des Rohrleitungselements bzw. gegebenenfalls des ersten und des zweiten Flansches.

27. Verfahren nach den Ansprüchen 25 und 26, **dadurch gekennzeichnet, daß** die nicht ummantelten hinteren Enden (1-1a, 1-1b) der Innenseiten des ersten bzw. des zweiten Flansches, die mit den hinteren Endteilen (4b) der Halbmuffen in Kontakt sind, sowie die äußeren Anlageflächen (6a', 6b') im Verschweißungsbereich (6d) des ersten und des zweiten Flansches mit dem hinteren Endteil (4b) der Halbmuffen lokal mit einem korrosionsfesten Metall (6d) überzogen sind, das gleich demjenigen ist, aus dem die Halbmuffen bestehen.

28. Verfahren nach einem der Ansprüche 22 bis 27, **dadurch gekennzeichnet, daß** die Außenseiten der Endteile reduzierter Dicke (3a, 3b) der Muffen oder gegebenenfalls Halbmuffen Rastenflächen (3-2) sind, vorzugsweise mit einem sich im wesentlichen abgeschrägt verjüngenden Ende (3-1), das dessen Einführen und Verankern an den Innenseiten der Endteile reduzierter Dicke (2a, 2b) der entsprechenden Ummantelungen ermöglicht, wodurch eine mechanische Verbindung zwischen den Außenseiten der Muffen oder Halbmuffen und der Innenseite der Ummantelungen reduzierter Dicke, durch einfaches Hineindrücken der Muffen oder gegebenenfalls Halbmuffen in axialer Längsrichtung in die offenen Enden des Anschlußteils, des Rohrleitungselements bzw. gegebenenfalls des ersten bzw. zweiten Flansches hergestellt wird.
